# EUROPEAN PATENT APPLICATION

(11) **EP 1 122 618 A1**
(43) Date of publication of application: **08.08.2001**
(21) Application number: 00909692.6
(22) Date of filing: 17.03.2000
(51) Int. Cl.: G04B 17/06, G04C 3/04, G01C 9/06, G01C 9/18

(54) **MECHANICAL TIMEPIECE WITH ATTITUDE DETECTOR**

(30) Priority: 12.08.1999 JP 43789999; 12.08.1999 JP 43799999
(71) Applicant: Seiko Instruments Inc., Chiba-shi, Chiba-ken 261-0023 (JP)
(72) Inventor: WATANABE, Mamoru, Seiko Instruments Inc., Chiba-shi, Chiba 261-0023 (JP); JUJO, Koichiro, Seiko Instruments Inc., Chiba-shi, Chiba 261-0023 (JP); TOKORO, Takeshi, Seiko Instruments Inc., Chiba-shi, Chiba 261-0023 (JP)
(74) Representative: Sturt, Clifford Mark
(86) International application number: PCT/JP00/01625
(87) International publication number: WO 01/13183

(57) **Abstract**

In a mechanical watch comprising an inventive position detector, a movement 100 comprises a movement barrel 120, a center wheel & pinion 124, a third wheel & pinion 126, a fourth wheel & pinion 128, a balance 140, an escape wheel & pinion 130 and a pallet fork 142. Coils 180 are mounted to the front side surface of a main plate 102 so as to face to the surface of a balance wheel 140b on the main plate side. A balance magnet 140e is mounted on the surface of the balance wheel 140b on the main plate side so as to face to the front side surface of the main plate 102. A gap between the balance magnet 140e and the coil 180 is determined such that magnetic flux of the balance magnet 140e affects the coil 180 when the coil 180 is conductive. A position detector 610 and a circuit block 606 are disposed on the front side of the main plate 102. The position detector 610 is mounted on the circuit block 606.

The position detector comprises a case 610a whose shape seen from the top is circular and whose shape seen from the side is elliptic, a plurality of patterns A1 through E2 disposed on the inner surface of the case 610a and conductive fluid 608 stored within the case 610a.

The operation of the balance 140 is controlled based on the detected result of the position of the mechanical watch detected by the position detector 610 in the mechanical watch comprising the inventive position detector.

## Description

### TECHNICAL FIELD

The present invention relates to a mechanical watch comprising a position detector and controlling rotation of a balance based on the result of position of the mechanical watch detected by the position detector.

### BACKGROUND OF THE INVENTION

### (1) Structure of Prior Art Mechanical Watch:

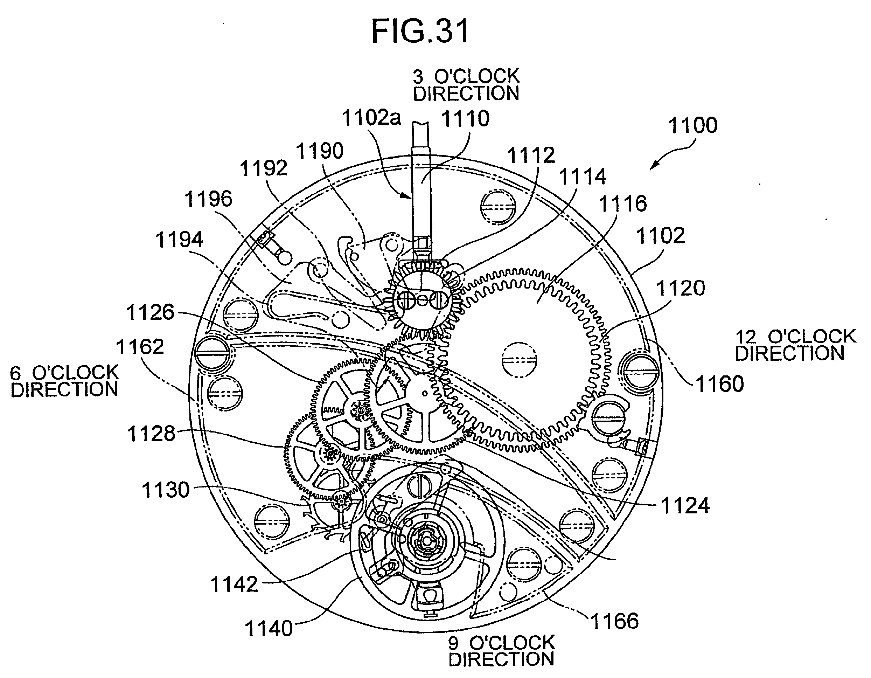

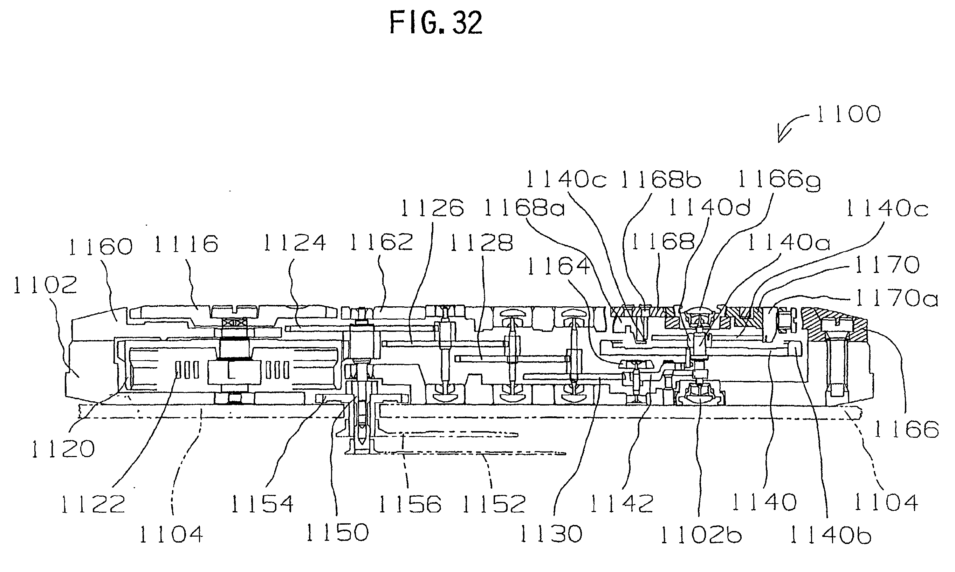

As shown in FIGs. 31 and 32, a movement (mechanical body) 1100 of a prior art mechanical watch has a main plate 1102 which forms of a substrate of the movement. A winding stem 1110 is rotably assembled to a winding stem guide hole 1102a of the main plate 1102. A dial 1104 (indicated by imaginary lines in FIG. 32) is mounted to the movement 1100.

Assuming the state in which the dial is mounted, "flat position" in which the dial becomes horizontal and "erecting (vertical) position" in which the dial becomes vertical may be defined in the mechanical watch.

Further, assuming the state in which the dial is mounted in the mechanical watch, the direction of heading to the 12 o'clock indicator of the dial from the center of the mechanical watch is called "12 o'clock direction", the direction of heading to the 3 o'clock indicator of the dial from the center of the mechanical watch is called "3 o'clock direction" the direction of heading to the 6 o'clock indicator of the dial from the center of the mechanical watch is called "6 o'clock direction" and the direction of heading to the 9 o'clock indicator of the dial from the center of the mechanical watch is called "9 o'clock direction" (see FIG. 31).

Still more, assuming the state in which the dial is mounted vertically in the mechanical watch, the position in which the 12 o'clock indicator of the dial comes to the top is called as "position on the 12 o'clock", the position in which the 3 o'clock indicator of the dial comes to the top is called as "position on the 3 o'clock", the position in which the 6 o'clock indicator of the dial comes to the top is called as "position on the 6 o'clock" and the position in which the 9 o'clock indicator of the dial comes to the top is called as "position on the 9 o'clock".

Then, the mechanical watch has been manufactured by adjusting the rate of the mechanical watch so that measured values of the "respective rates" satisfy predetermined standard by measuring the "rate" of the four erecting positions of "the position on 12 o'clock", "the position on 3 o'clock", "the position on 6 o'clock" and "the position on 9 o'clock".

In the explanation below, "the rate when the mechanical watch is set at the position of the 12 o'clock" will be called as "rate on 12", the rate when the mechanical watch is set at the position of 3 o'clock" will be called as "rate on 3", "the rate when the mechanical watch is set at the position of the 6 o'clock" will be called as "rate on 6" and the rate when the mechanical watch is set at the position of the 9 o'clock" will be called as "rate on 9".

Among the both sides of the main plate, the side where the dial is located will be called as the "back side" of the movement and the side opposite from the side where the dial is located will be called as the "front side" of the movement in general. A wheel train assembled on the "front side" of the movement will be called as a "front wheel train" and a wheel train assembled on the "back side" of the movement will be called as a "back wheel train".

The position of a winding stem 1110 in the axial direction is determined by a switch comprising a setting lever 1190, a yoke 1192, a yoke spring 1194 and a setting lever jumper 1196. A winding pinion 1112 is rotably provided at the guide axis section of the winding stem 1110. When the winding stem 1110 is rotated when the winding stem 1110 is located at the first winding stem position (0 stage) where it is closest to the inside of the movement along the rotational axis direction, the winding pinion 1112 rotates as a clutch wheel rotates. Then, a crown wheel 1114 rotates as the winding pinion 1112 rotates. A ratchet wheel 1116 also rotates as the crown wheel 1114 rotates. A main spring 1122 stored in a movement barrel 1120 is wound up as the ratchet wheel 1116 rotates. A center wheel & pinion 1124 rotates as the movement barrel 1120 rotates. An escape wheel & pinion 1130 rotates as a fourth wheel & pinion 1128, a third wheel & pinion 1126 and the center wheel & pinion 1124 rotate. The movement barrel 1120, the center wheel & pinion 1124, the third wheel & pinion 1124 and the fourth wheel & pinion 1128 compose the front wheel train.

An escape and governor for controlling the rotation of the front wheel train comprises a balance 1140, the escape wheel & pinion 1130 and a pallet fork 1142. The balance 1140 comprises a balance stem 1140a, a balance wheel 1140b and a hair spring 1140c. A cannon pinion 1150 rotates in the same time with the rotation of the center wheel & pinion 1124. A minute hand 1152 mounted to the cannon pinion 1150 indicates "minute". The cannon pinion 1150 is provided with a slip mechanism for the center wheel & pinion 1124. An hour wheel 1154 rotates via the rotation of a minute wheel based on the rotation of the cannon pinion 1150. An hour hand 1156 mounted to the hour wheel 1154 indicates "hour".

The movement barrel 1120 is rotably supported with respect to the main plate 1102 and a barrel bridge 1160. The center wheel & pinion 1124, the third wheel & pinion 1126, the fourth wheel & pinion 1128 and the escape wheel & pinion 1130 are rotably supported with respect to the main plate 1102 and a train wheel bridge 1162. The pallet fork 1142 is rotably supported with respect to the main plate 1102 and a pallet fork bridge 1164. The balance 1140 is rotably supported with respect to the main plate 1102 and a balance bridge 1166.

The hair spring 1140c is a spiral thin plate spring having a plurality of number of turns. The inner edge of the hair spring 1140c is fixed to a hair spring ball 1140d fixed to the balance stem 1140a and the outer edge of the hair spring 1140c is fixed by a screw via a stud support 1170a fixed to a hair spring bridge 1170 which is fixed to the balance bridge 1166.

A regulator 1168 is rotably mounted to the balance bridge 1166. A hair spring bridge 1340 and a hair spring bar 1342 are attached to the regulator 1168. The portion of the hair spring 1140c closed to the outer edge thereof is located between the hair spring bridge 1340 and the hair spring bar 1342.

### (2) Spring Torque and Balance Swing Angle of Prior Art Mechanical Watch:

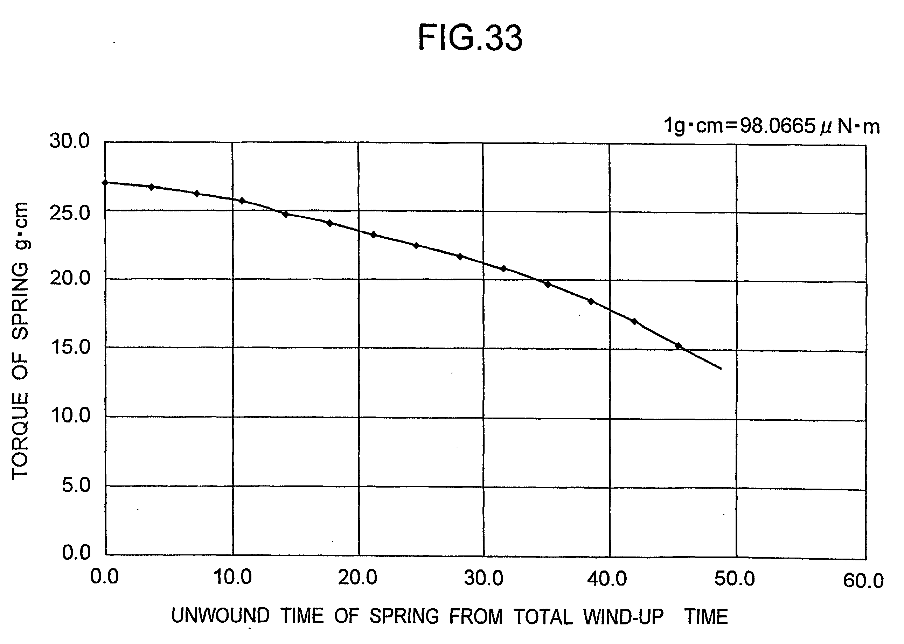

Torque of the main spring of the typical conventional mechanical watch decreases as the main spring is unwound from the state in which the main spring has been wound up completely (total wind-up state) and as the duration elapses in general as shown in FIG. 33. For instance, while the torque of the spring is about 27 g·cm in the total wind-up state in case shown in FIG. 33, it becomes about 23 g·cm when 20 hours elapses from the total wind-up state and becomes about 18 g·cm when 40 hours elapse from the total wind-up state.

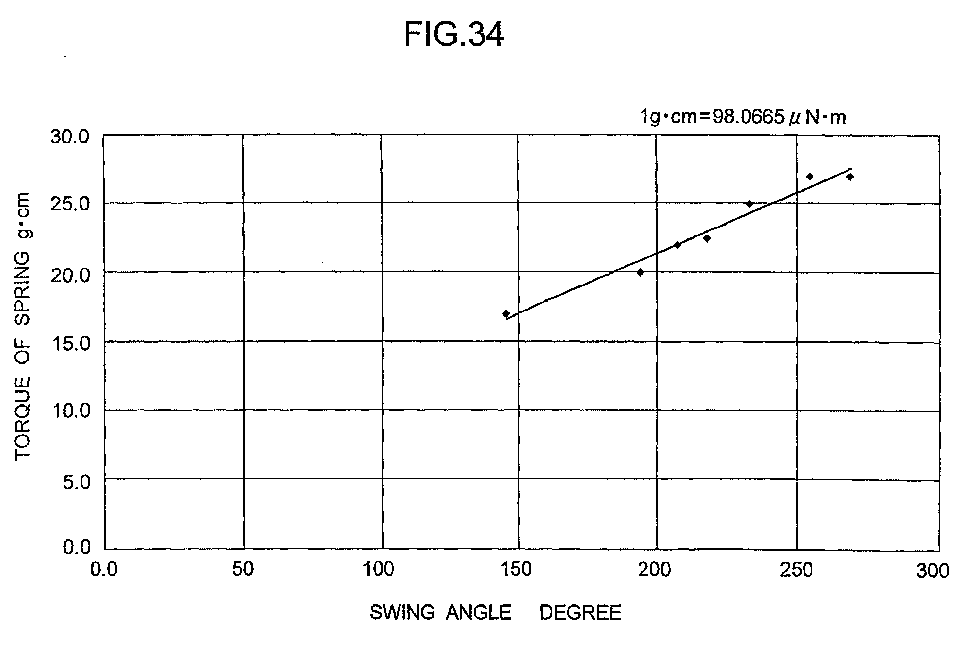

When the torque of the spring decreases, an angle of swing of the balance also decreases as shown in FIG. 34 in general in the typical conventional mechanical watch. For instance, the angle of swing of the balance is about 240 to 270 degrees when the spring torque is 25 to 28 g·cm and the swing angle of the balance becomes about 180 to 240 degrees when the spring torque is 20 to 25 g·cm in the case shown in FIG. 34.

### (3) Instantaneous Rate of Prior Art Mechanical Watch:

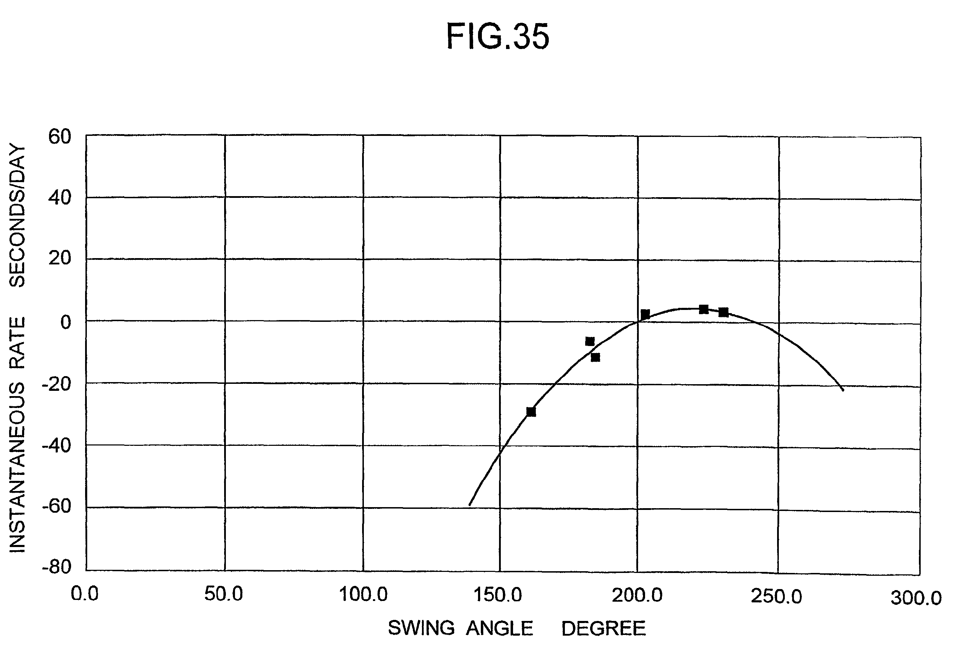

FIG. 35 shows the transition of the instantaneous rate (numerical values indicating the precision of the watch) with respect to the swing angle of the balance when the typical conventional mechanical watch is placed in the flat position. Here, the "instantaneous rate" means "a value indicating an advancement or delay of the mechanical watch when one day elapses when the mechanical watch is supposedly left alone one day while maintaining the conditions such as the swing angle of the balance and the environment when the rate was measured". The instantaneous rate delays when the balance swing angle is 240 degrees or more or is 200 degrees or less in case shown in FIG. 34.

For instance, although the instantaneous rate is about 0 to 5 seconds/day (advance by about 0 to 5 seconds per day) when the swing angle of the balance is about 200 to 240 degrees in the typical conventional mechanical watch as shown in FIG. 35, the instantaneous rate becomes about -20 seconds/day (delay by about 20 seconds per day) when the swing angle of the balance is about 170 degrees.

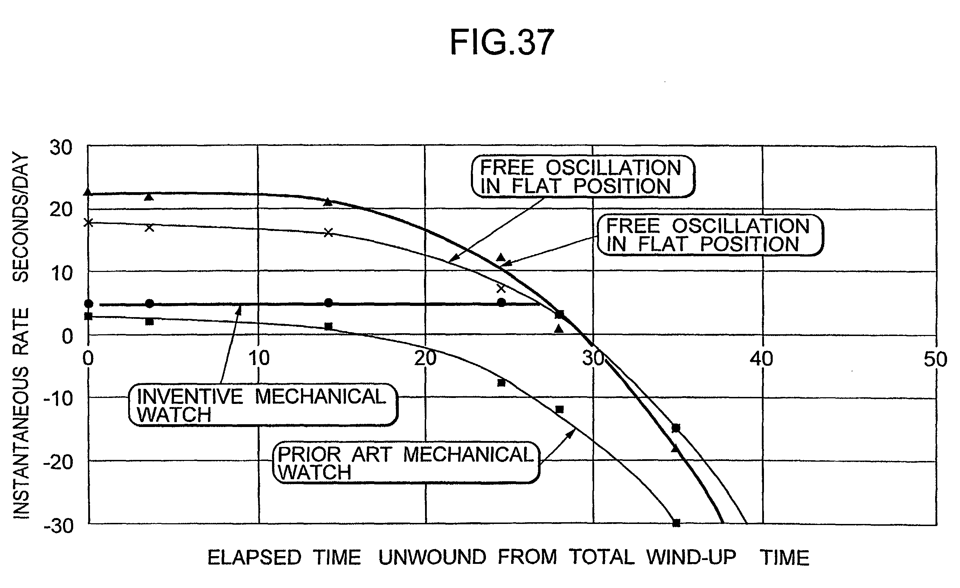

FIG. 37 shows the transition of elapsed time and instantaneous rate when the spring is unwound from the total wind-up state in the typical conventional mechanical watch. Here, the "rate" indicating the advance or delay of the watch per day may be obtained by integrating the instantaneous rate with respect to the elapsed time in which the spring has been unwound from the total wind-up state and which is indicated by a thick line in FIG. 37 across 24 hours in the conventional mechanical watch.

The instantaneous rate delays in general in the conventional mechanical watch because the spring torque decreases and the swing angle of the balance also decreases as the spring is unwound from the total wind-up state and as the duration elapses. Therefore, considering the delay of the watch after the elapse of the duration of 24 hours, the conventional mechanical watch has been adjusted so that the "rate" which indicates the advancement or delay of the watch per day becomes plus by advancing the instantaneous rate when the spring is totally wound up in advance.

For instance, although the instantaneous rate of the conventional typical mechanical watch is about 5 seconds/day (advances by about 5 seconds per day) in the total wind-up state as shown by the thick line in FIG. 37, the instantaneous rate becomes about -1 second/day (delays by about 1 second per day) when 20 hours elapse from the total wind-up state, the instantaneous rate becomes about -5 seconds/day (delays by about 5 seconds per day) when 24 hours elapse from the total wind-up state and the instantaneous rate becomes about -15 seconds/day (delays by about 15 seconds per day) when 30 hours elapse from the total wind-up state,

### (4) Position and Instantaneous Rate of Conventional Mechanical Watch:

The instantaneous rate of the conventional typical mechanical watch in the "flat position" and "back flat position" is in the advance side more than the instantaneous rate in the "erected position".

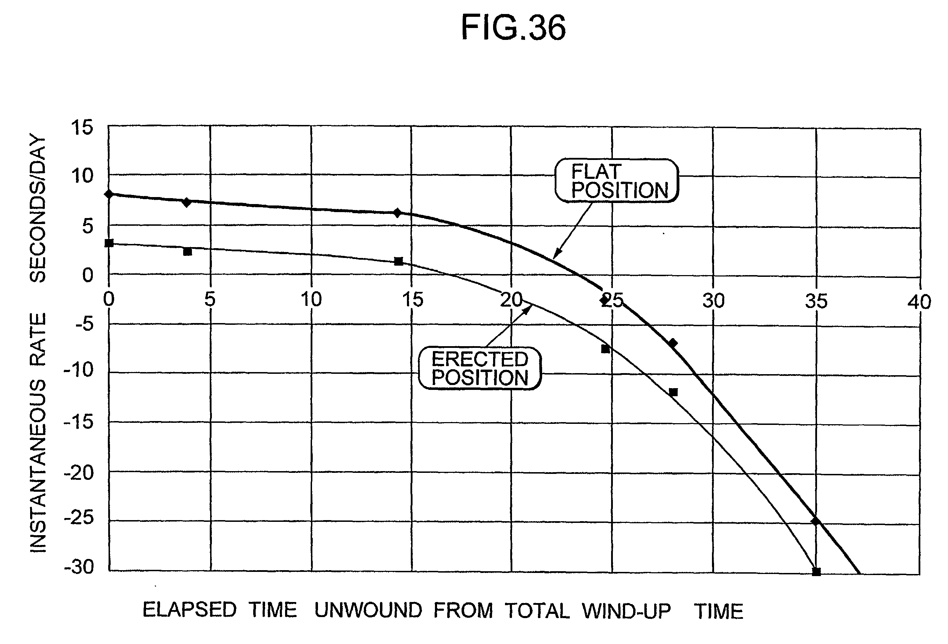

For instance, although the instantaneous rate of the conventional typical mechanical watch is about 8 seconds/day in the total wind-up state in the "flat position" and "back flat position" as indicated by a thick line in FIG. 36, the instantaneous rate becomes about 3 seconds/day when 20 hours elapse from the total wind-up state (advances by about 3 seconds per day), the instantaneous rate becomes about -2 seconds/day when 24 hours elapse from the total wind-up state (delays by about 2 seconds per day) and the instantaneous rate becomes about -12 seconds/day when 30 hours elapse from the total wind-up state (delays by about 12 seconds per day).

In contrary to that, although the instantaneous rate of the conventional typical mechanical watch is about 3 seconds/day (advances by about 3 seconds per day) in the total wind-up state in the "erected position" as indicated by a thin line in FIG. 36, the instantaneous rate becomes about -2 seconds/day when 20 hours elapse from the total wind-up state (delays by about 2 seconds per day), the instantaneous rate becomes about -7 seconds/day when 24 hours elapse from the total wind-up state (delays by about 7 seconds per day) and the instantaneous rate becomes about -17 seconds/day when 30 hours elapse from the total wind-up state (delays by about 17 seconds per day).

### (5) Typical Documents Disclosing Prior Arts

1) Japanese Utility Model Laid-Open No. 41675/1979 has disclosed a balance swing angle adjusting apparatus provided with a swing angle adjusting plate which gives braking force to the balance by generating overcurrent every time when a magnet of the balance rocks and approaches.
2) Japanese Patent Laid-Open No. 159726/1983 has disclosed a body position detector arranged so as to have six patterns within an inner surface of a case having a hexahedron shape and to include a conductive fluid for connecting the patterns.
3) Japanese Patent Laid-Open No. 79117/1986 has disclosed a tilt angle detector having a container containing conductive fluid and comprising at least three fluid level detecting lines for detecting the level of the conductive fluid.
4) Japanese Patent Laid-Open No. Hei. 120214/1988 has disclosed an angle sensor comprising a globular hollow case, a plurality of contact points provided within the case and conductive fluid concealed within the case.
5) Japanese Patent Laid-Open No. Hei. 307805/1994 has disclosed a position detector having a hollow outer spherical body and an inner spherical body fixed by providing a predetermined layer space in the hollow section of the outer spherical body and constructed so as to dispose fluid conductor between a first conductive area containing a pattern provided in the whole inner area of the outer spherical body and a second conductive area containing a plurality of patterns provided in dot on the outside of the inner spherical body. The position detector allows the fluid conductor to move within the layer space between the first and second conductive areas and is arranged so as to be able to detect the position of the apparatus by conducting one of the patterns in the second conductive area within the pattern of the first conductive area by the fluid conductor.

### (6) Objects of the Invention:

It is an object of the present invention to provide a mechanical watch which can detect the position of the mechanical watch and can control the swing angle of the balance so that it falls within a predetermined range based on the result of detection.

It is another object of the invention to provide a precision mechanical watch whose rate changes less even when an elapsed time passes from the total wind-up state.

### DISCLOSURE OF THE INVENTION

According to the present invention, a mechanical watch comprises a spring composing a power source of the mechanical watch, a front wheel train which rotates by rotational force which is generated when the spring is unwound and an escape and governor for controlling the rotation of the front wheel train. The escape and governor comprises a balance which repeats right and left turns alternately, an escape wheel & pinion which rotates based on the rotation of the front wheel train and a pallet fork which controls the rotation of the escape wheel & pinion based on the operation of the balance. The mechanical watch further comprises a switch mechanism which outputs ON signals when the rotational angle of the balance exceeds a predetermined threshold value and outputs OFF signals when the rotational angle of the balance does not exceed the predetermined threshold value, a balance rotational angle controlling mechanism which is arranged so as to apply force which suppresses the rotation of the balance to the balance when the switch mechanism outputs the ON signal and a position detector for detecting the position of the mechanical watch.

The inventive mechanical watch is characterized in that the operation of the balance rotational angle controlling mechanism is controlled based on the resultant position of the mechanical watch detected by the position detector.

The inventive mechanical watch is characterized in that the position detector comprises a case whose shape seen from the top is circular and whose shape seen from the side is elliptic, a plurality of patterns disposed on the inner surface of the case and conductive fluid stored within the case.

Preferably, the position detector in the inventive mechanical watch comprises a case whose shape seen from the top is circular and whose shape seen from the side is elliptic, a plurality of patterns disposed on the inner surface of the case and conductive fluid stored within the case.

Preferably, a position detector in the inventive mechanical watch comprises a case whose outer shape is spherical, a plurality of patterns disposed concentrically on the inner surface of the case and conductive fluid stored within the case.

Preferably, a position detector in the inventive mechanical watch comprises a case whose shape seen from the top is circular and whose sectional shape seen from the side is the shape of cocoon, a plurality of patterns disposed on the inner surface of the case and conductive fluid stored within the case.

Preferably, the position detector in the inventive mechanical watch comprises insulating fluid stored within the case.

Preferably, the patterns of the position detector in the inventive mechanical watch are disposed concentrically and the respective patterns are formed into the circular or ringed shape.

Preferably, the switching mechanism in the inventive mechanical watch is constructed so as to output ON signals when the hair spring provided in the balance contacts with a contact member composing the switch lever.

Preferably, the balance rotational angle control mechanism in the inventive mechanical watch comprises a balance magnet provided in the balance and coils disposed so as to be able to affect magnetic force to the balance magnet and the coils apply magnetic force to the balance magnet when the switching mechanism outputs the ON signal to suppress the rotation of the balance and apply no magnetic force to the balance magnet when the switching mechanism outputs the OFF signal.

Preferably, the position detector of the inventive mechanical watch comprises a plurality of resistors provided so as to correspond to the conductive state of the patterns of the position detector and having different resistance values and one of the resistors is connected to the coil based on the resultant position of the mechanical watch detected by the position detector.

The rotational angle of the balance of the mechanical watch may be suppressed effectively and the precision of the mechanical watch may be improved by constructing as described above.

### BRIEF DESCRIPTION OF THE DRAWINGS

FIG. 1 is a plan view schematically showing one embodiment of the front side of a movement of a mechanical watch comprising an inventive position detector (part of the components thereof is omitted and plate members are indicated by imaginary lines in FIG. 1).

FIG. 2 is a schematic partial section view of the movement of the mechanical watch comprising the inventive position detector (part of the components thereof is omitted in FIG. 2).

FIG. 3 is an enlarged partial plan view showing the schematic shape of the balance part when the switching mechanism is off in the mechanical watch comprising the inventive position detector.

FIG. 4 is an enlarged partial section view showing the schematic shape of the balance part when the switching mechanism is off in the mechanical watch comprising the inventive position detector.

FIG. 5 is a perspective view showing the schematic shape of a balance magnet used in the mechanical watch comprising the inventive position detector.

FIG. 6 is a longitudinal section view showing the schematic shape of the inventive position detector according to a first embodiment.

FIG. 7 is a plan view showing the schematic shape of patterns provided at the inner surface of a lower half part of a case of the inventive position detector of the first embodiment.

FIG. 8 is a longitudinal section view showing a state in which the position detector is tilted in the inventive position detector of the first embodiment.

FIG. 9 is a longitudinal section view showing a state in which the position detector is disposed vertically in the inventive position detector of the first embodiment.

FIG. 10 is a perspective view showing the shape of a lead wire in the inventive position detector of the first embodiment.

FIG. 11 is a block diagram showing the operation of the inventive position detector in the mechanical watch comprising the inventive position detector.

FIG. 12 is a circuit connection diagram showing a state in which two patterns conduct in the first embodiment of the inventive position detector.

FIG. 13 is a table showing the relationship among the positions in which the mechanical watch is disposed, pattern conductive states and values of resistors provided in the circuit block in the mechanical watch of the first embodiment comprising the inventive position detector.

FIG. 14 is an enlarged partial plan view showing the schematic shape of the balance part when the switching mechanism is ON in the mechanical watch comprising the inventive position detector.

FIG. 15 is an enlarged partial plan view showing the schematic shape of the balance part when the switching mechanism is ON in the mechanical watch comprising the inventive position detector.

FIG. 16 is a longitudinal section view showing the schematic shape of a second embodiment of the inventive position detector.

FIG. 17 is a table showing the relationship among the positions in which the mechanical watch is disposed, pattern conductive states and values of resistors provided in the circuit block in the mechanical watch of the second embodiment comprising the inventive position detector.

FIG. 18 is a longitudinal section view showing the schematic shape of a third embodiment of the inventive position detector.

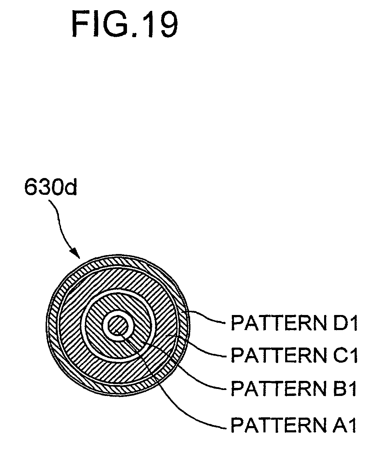

FIG. 19 is a plan view showing the schematic shape of patterns provided at the inner surface of a lower half part of a case of the inventive position detector of the third embodiment.

FIG. 20 is a longitudinal section view showing a state in which the position detector is tilted in the inventive position detector of the third embodiment.

FIG. 21 is a longitudinal section view showing a state in which the position detector is disposed vertically in the inventive position detector of the third embodiment.

FIG. 22 is a perspective view showing the appearance of a fourth embodiment of the inventive position detector.

FIG. 23 is a longitudinal section view showing the schematic shape of the fourth embodiment of the inventive position detector.

FIG. 24 is a longitudinal section view showing a state in which the position detector is tilted in the inventive position detector of the fourth embodiment.

FIG. 25 is a longitudinal section view showing a state in which the position detector is disposed vertically in the inventive position detector of the fourth embodiment.

FIG. 26 is a circuit connection diagram in a state in which two patterns conduct in the fourth embodiment of the inventive position detector.

FIG. 27 is a table showing the relationship among the positions in which the mechanical watch is disposed, pattern conductive states and values of resistors provided in the circuit block in the mechanical watch of the fourth embodiment comprising the inventive position detector.

FIG. 28 is a plan view showing the schematic shape of patterns provided at the inner surface of a lower half part of a case of the inventive position detector of the fourth embodiment.

FIG. 29 is a longitudinal section view showing the schematic shape of a fifth embodiment of the inventive position detector.

FIG. 30 is a longitudinal section view showing the schematic shape of a sixth embodiment of the inventive position detector.

FIG. 31 is a plan view showing the schematic shape of the front side of a movement of a prior art mechanical watch (a part of components thereof is omitted and bridge members are illustrated by imaginary lines in FIG. 31).

FIG. 32 is a schematic partial section view of the movement of the prior art mechanical watch (a part of the components thereof is omitted in FIG. 32).

FIG. 33 is a graph schematically showing the relationship between an elapsed time during which the spring is unwound from the total wind-up state and torque of the spring in the mechanical watch.

FIG. 34 is a graph schematically showing the relationship between the balance swing angle and the spring torque in the mechanical watch.

FIG. 35 is a graph schematically showing the relationship between the balance swing angle and the instantaneous rate when the mechanical watch is placed in the flat position.

FIG. 36 is a graph schematically showing the relationship between an elapsed time during which the spring is unwound from the total wind-up state and the instantaneous rate (flat and erected positions) in the mechanical watch.

FIG. 37 is a graph schematically showing the relationship between an elapsed time during which the spring is unwound from the total wind-up state and the instantaneous rate in the inventive and prior art mechanical watch.

### BEST MODE FOR CARRYING OUT THE INVENTION

An embodiment of the inventive mechanical watch will be explained below based on the drawings.

### (1) Gear Train, Escape and Governor and Switch:

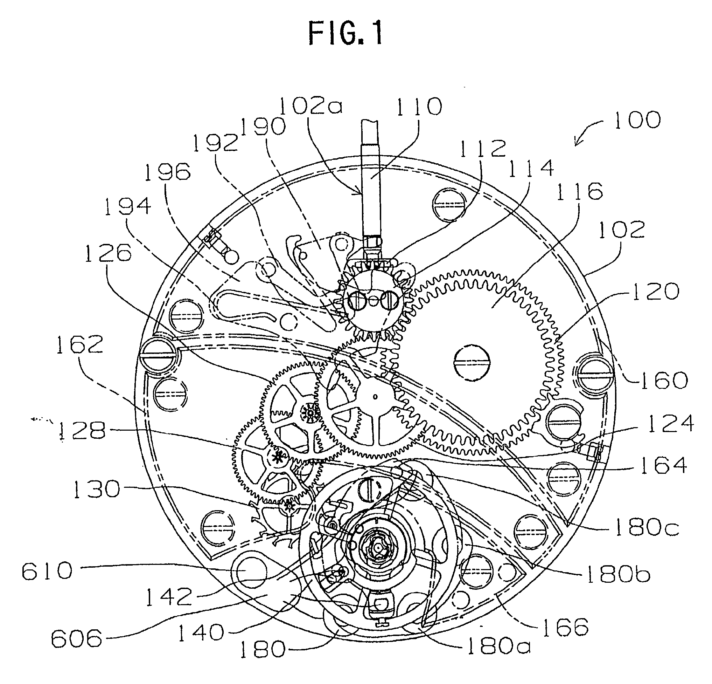

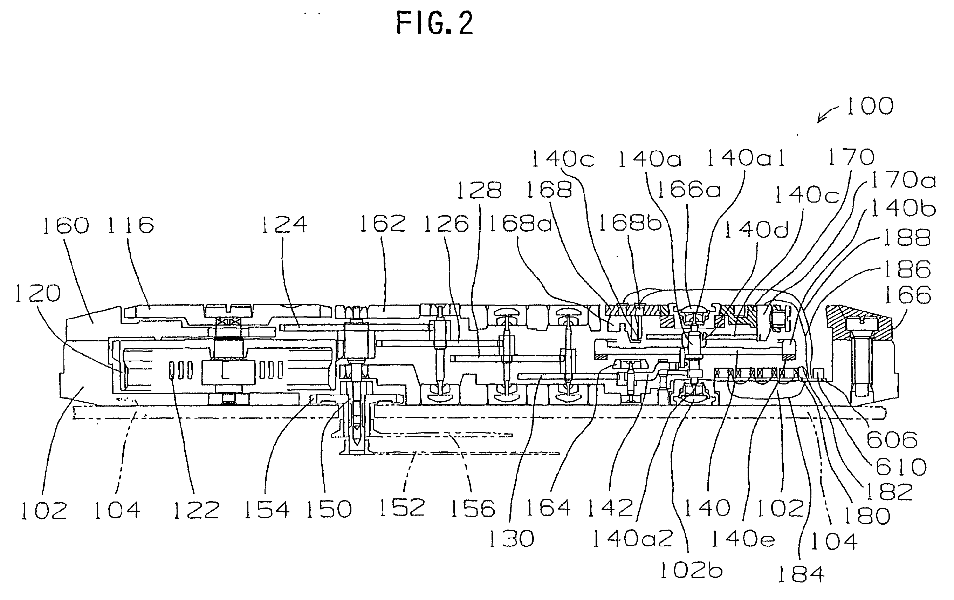

As shown in FIGs. 1 and 2, a movement (mechanical body) 100 of a mechanical watch has a main plate 102 which forms of a substrate of the movement in the embodiment of the inventive mechanical watch. A winding stem 110 is rotably assembled to a winding stem guide hole 102a of the main plate 102. A dial 104 (illustrated by imaginary lines in FIG. 2) is mounted to the movement 100.

The winding stem 110 has a square section and a guide axis section. A clutch wheel (not shown) is assembled to the square section of the winding stem 110. The clutch wheel has the same rotary axial line with the rotary axial line of the winding stem 110. That is, the clutch wheel has a square hole and rotates based on the rotation of the winding stem 110 by fitting the square section of the winding stem 110 to this square hole. The clutch wheel has A teeth and B teeth. The A teeth are provided at the edge of the clutch wheel closer to the center of the movement and the B teeth are provided at the edge of the clutch wheel closer to the outside of the movement.

The movement 100 is provided with a switch for deciding the position of the winding stem 110 in the axial direction. The switch comprises a setting lever 190, a yoke 192, a yoke spring 194 and a setting lever jumper 196. The position of the winding stem 110 in rotary axial direction is determined based on the rotation of the setting lever. The position of the clutch wheel in the rotational axial direction is determined based on the rotation of the yoke. The yoke 192 is positioned at two positions in the rotational direction based on the rotation of the setting lever.

A winding pinion 112 is rotably assembled to the guide axis section of the winding stem 110. When the winding stem 110 is rotated when the winding stem 110 is located at the first winding stem position (0-th stage) closest to the inner side of the movement along the rotary axial direction, the winding pinion 112 rotates via the rotation of the clutch wheel. A crown wheel 114 is assembled so as to rotate by the rotation of the winding pinion 112. A ratchet wheel 116 is assembled so as to rotate by the rotation of the crown wheel 114.

The movement 100 uses a spring 122 stored in a movement barrel 120 as power source thereof. The spring 122 is made of an elastic material such as iron having the quality of spring. The spring 122 may be wound up by rotating the ratchet wheel 116.

A center wheel & pinion 124 is assembled so as to rotate as the movement barrel 120 rotates. A third wheel & pinion 126 is assembled so as to rotate based on the rotation of the center wheel & pinion 124. A fourth wheel & pinion 128 is assembled so as to rotate based on the rotation of the third wheel & pinion 126. An escape wheel & pinion 130 is assembled so as to rotate based on the rotation of the fourth wheel & pinion 128. The movement barrel 120, the center wheel & pinion 124, the third wheel & pinion 126 and the fourth wheel & pinion 128 compose the front wheel train.

The movement 100 is provided with an escape and governor for controlling the rotation of the front wheel train. The escape and governor comprises a balance 140 which repeats right and left turns at constant period, the escape wheel & pinion 130 which rotates based on the rotation of the front wheel train and a pallet fork 142 for controlling the rotation of the escape wheel & pinion 130 based on the operation of the balance 140.

As shown in FIG. 1 and 2, the balance 140 comprises a balance stem 140a, a balance wheel 140b and a hair spring 140c. The hair spring 140c is made of an elastic material having the quality of spring such as "elinver". That is, the hair spring 140c is made of a metallic conductive material.

A cannon pinion 150 rotates in the same time based on the rotation of the center wheel & pinion 124. A minute hand attached 152 to the cannon pinion 150 indicates "minute". The cannon pinion 150 is provided with a slip mechanism having predetermined slip torque to the center wheel & pinion 124.

A minute wheel (not shown) rotates based on the rotation of the cannon pinion 150. An hour wheel 154 rotates based on the rotation of the minute wheel. An hour hand 156 attached to the hour wheel 154 indicates "hour".

The movement barrel 120 is rotably supported with respect to the main plate 102 and a barrel bridge 160. The center wheel & pinion 124, the third wheel & pinion 126, the fourth wheel & pinion 128 and the escape wheel & pinion 130 are rotably supported with respect to the main plate 102 and a train wheel bridge 162. The pallet fork 142 is rotably supported with respect to the main plate 102 and a pallet fork bridge 164.

The balance 140 is rotably supported with respect to the main plate 102 and a balance bridge 166. That is, an upper mortise 140a1 of the balance stem 140a is rotably supported with respect to a balance upper bearing 166a fixed to the balance bridge 166. The balance upper bearing 166a comprises a balance upper hole jewel and balance upper bridge jewel. The balance upper hole jewel and the balance upper bridge jewel are made of insulating material such as ruby.

An under mortise 140a2 of the balance stem 140a is rotably supported with respect to a balance under bearing 102b fixed to the main plate 102. The balance under bearing 102b comprises a balance lower hole jewel and balance lower bridge jewel. The balance lower hole jewel and the balance lower bridge jewel are made of insulating material such as ruby.

The hair spring 140c is a spiral thin plate spring having a plurality of number of turns. The inner edge of the hair spring 140c is fixed to a hair spring ball 140d which is in turn fixed to the balance stem 140a. The outer edge of the hair spring 140c is fixed by a screw via a stud holder 170a attached to a stud support 170 rotably fixed to the balance bridge 166. The balance bridge 166 is made of a metallic conductive material such as brass. The stud support 170 is made of a metallic conductive material such as iron.

### (2) Switching Mechanism:

A switching mechanism of the inventive mechanical watch will be explained next.

As shown in FIGS. 1 through 4, a switch lever 168 is attached rotably to the balance bridge 166. A first contact member 168a and a second contact member 168b are attached to the switch lever 168. The switch lever 168 is attached to the balance bridge 166 and is attached rotably centering on the center of rotation of the balance 140. The switch lever 168 is made of a plastic insulating material such as polycarbonate. The first contact member 168a and the second contact member 168b are made of a metallic conductive material such as brass. The portion of the hair spring 140c close to the outer edge is positioned between the first contact member 168a and the second contact member 168b.

Coils 180, 180a, 180b and 180c are attached to the front side face of the main plate 102 so as to face to the face of the balance wheel 140b on the main plate side. Although a number of coils may be four for instance as shown in FIGs. 1 through 4, it may be one, two, three or more than four.

The balance magnet 140e is attached to the face of the balance wheel 140b on the main plate side so as to face to the front face of the main plate 102.

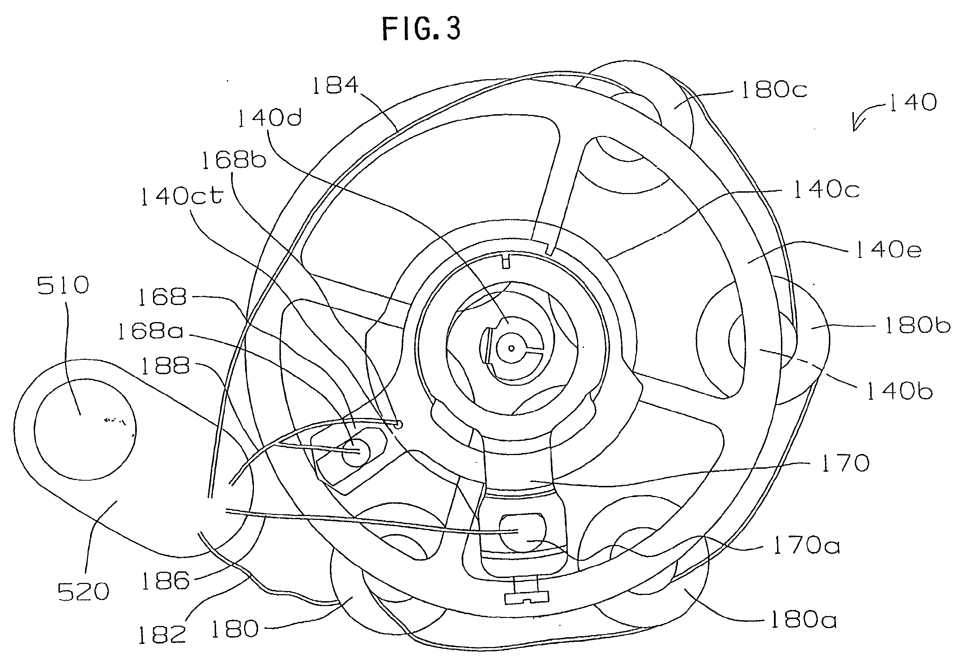

When a plurality of coils are disposed as shown in FIGs. 1 and 3, although it is preferable to set the interval of the coils in the circumfrential direction at integer times of the intervals of S and N poles of the balance magnet 140e in the circumfrential direction disposed so as to face to the coils, all of the coils need not have the equal intervals in the circumfrential direction. Further, when the plurality of coils are provided as described above, it is preferable to set wires between the respective coils in series so that they do not cancel the current generated in each coil by electromagnetic induction from each other. Or, the wires between the respective coils may be set in parallel so that they do not cancel the current generated in each coil by the electromagnetic induction from each other.

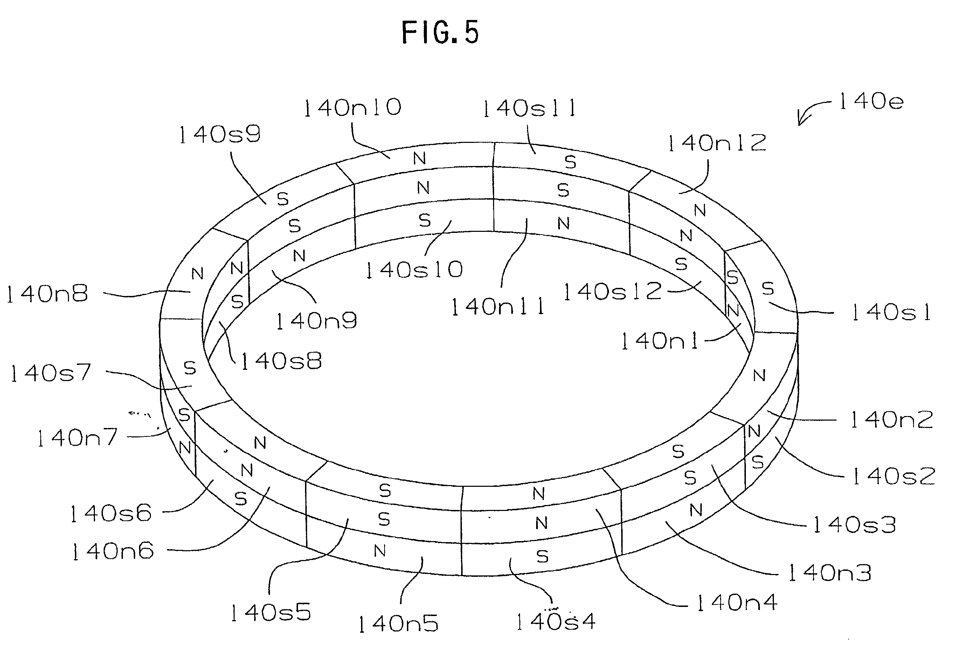

The balance magnet 140e has a ringed shape as shown FIG. 5 and is provided with magnet parts comprising, alternatively, twelve S poles 140s1 through 140s12 and twelve N poles 140n1 through 140n12 polarized in upper and lower parts for example along the circumfrential direction thereof. Although the number of magnet parts arrayed in ring in the balance magnet 140e is twelve in case shown in FIG. 5, it may be a plural number of two or more. Here, it is preferable to set such that the length of one chord of the magnet parts is almost equal to the outer diameter of one coil provided so as to face to that magnet part.

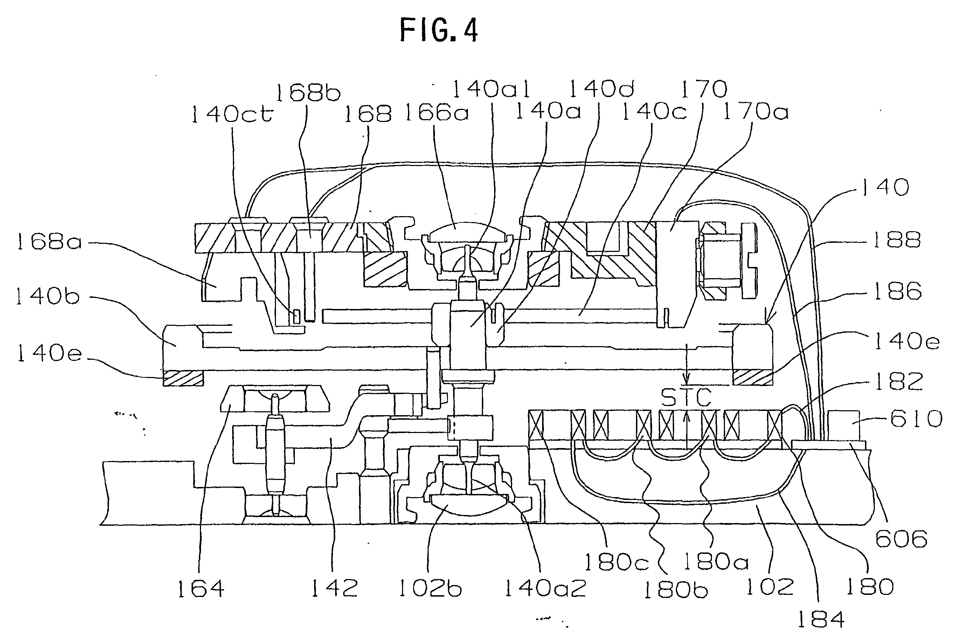

As shown in FIGs. 2 and 4, there is a gap between the balance magnet 140e and the coils 180, 180a, 180b and 180c. The gap between the balance magnet 140e and the coils 180, 180a, 180b and 180c is decided so that magnetic force of the balance magnet 140e affects the coils 180, 180a, 180b and 180c when the coils 180, 180a, 180b and 180c are conductive.

When the coils 180, 180a, 180b and 180c are not conductive, the magnetic force of the balance magnet 140e does not affect the coils 180, 180a, 180b and 180c. The balance magnet 140e is fixed to the face of the balance wheel 140b on the main plate side by adhesive or the like so that one face thereof contacts with the ringed rim section of the balance wheel 140b and the other face faces to the face of the main plate 102 on the front side.

It is noted that although the thickness of the hair spring 140c (thickness in the radial direction of the balance) is exaggerated in FIG. 4, it is 0.021 mm for example. The outer diameter of the balance magnet 140e is about 9 mm, the inner diameter thereof is 7 mm and the thickness is about 1 mm for instance. Its residual flux density is about 1 tesla. The number of turns of the respective coils 180, 180a, 180b and 180c is 1000 turns for instance and the coil diameter is about 25 µm. The gap STC between the balance magnet 140e and the coils 180, 180a, 180b and 180c is about 0.4 mm for example.

### (3) First Embodiment of Position Detector:

Next, a first embodiment of the position detector, a position detector 610 and a circuit block 606 in the embodiment of the mechanical watch comprising the inventive position detector will be explained.

As shown in FIGs. 1 through 4, the position detector 610 and the circuit block 606 are disposed on the front side of the main plate 102. The position detector 610 is attached to the circuit block 606. The circuit block 606 comprises a plurality of lead terminals.

A first lead wire 182 is provided so as to connect one terminal of the coil 180 with a first lead terminal (not shown) of the circuit block 606. The other terminal of the coil 180 is connected with one terminal of the coil 180a. The other terminal of the coil 180a is connected with one terminal of the coil 180b. The other terminal of the coil 180b is connected with one terminal of the coil 180c. That is, the four coils 180, 180a, 180b and 180c are connected in series.

A second lead wire 184 is provided so as to connect the other terminal of the coil 180c with a second lead terminal (not shown) of the circuit block 606. A third lead wire 186 is provided so as to connect the stud support 170 with a third lead terminal (not shown) of the circuit block 606. A fourth lead wire 188 is provided so as to connect the first contact member 168a, the second contact member 168b and a fourth lead terminal (not shown) of the circuit block 606.

Next, the construction of the first embodiment of the inventive position detector will be explained.

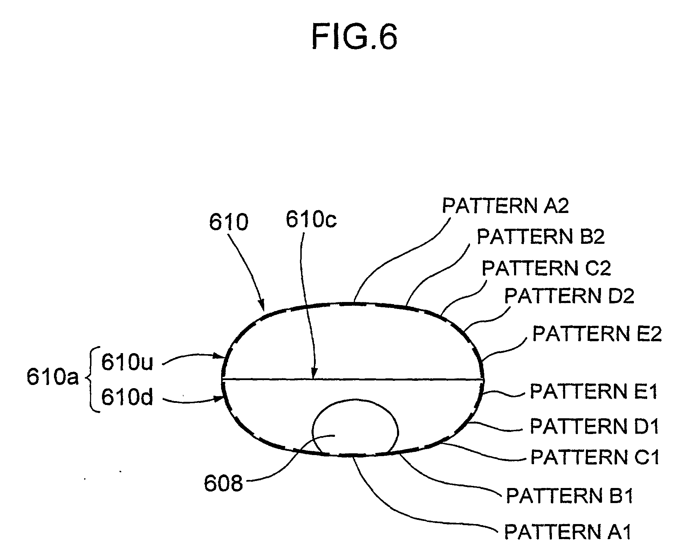

As shown in FIG. 6, the position detector 610 has a case 610a whose shape seen from the top is almost circular and whose shape seen from the side is almost "elliptic".

The "elliptic" defined here includes a shape in which a portion of a circular arc having a radius of first dimension and a portion of a circular arc having the equal radius with the radius of the first dimension are disposed so as to face such that the inner sides thereof approach each other and in which the portions of the both circular arcs are connected by portions of circular arcs having a radius of second dimension. It also includes a shape in which the portions of the both circular arcs are connected by a straight line or a shape in which the portions of the both circular arcs are connected by portions of a plurality of circular arcs. In this case, preferably the first dimension is smaller than the second dimension.

The case 610a is formed symmetrically in the vertical direction about a center plane 610c. That is, the case 610a comprises a case upper-half portion 610u and a case lower-half portion 610d. Accordingly, the case 610a is formed such that the case upper-half portion 610u and the case lower-half portion 610d are symmetrical about the center flat plane 610c. That is, the case upper-half portion 610u and the case lower-half portion 610d are formed in the same dimension and shape.

Accordingly, the case 610a may be formed by manufacturing two case upper half portions 610u and by jointing the two case upper half portions 610u at the part corresponding to the center flat plane 610c for example. They may be jointed by adhesive, by welding or by using an adhesive tape.

The small and thin position detector 610 may be realized by forming the case 610a whose shape seen from the side is almost elliptic as described above.

In FIG. 6, an x-axis line (the right direction is set as the positive direction in FIG. 6) and a y-axis line (the direction vertical to the surface of the paper and heading from the front to the back of the surface of the paper is set as the positive direction in FIG. 6) are defined in the horizontal direction and a z-axis line (the upper direction in FIG. 6 is set as the positive direction) is defined in the direction vertical to the x-axis line and y-axis line.

The shape of the case 610a at the plane containing the x-axis line and y-axis line, i.e., the shape of the transverse section at the center part, is almost circular and the shape thereof at the plane containing the x-axis line and z-axis line, i.e., the shape of the longitudinal section at the center part, is almost elliptic.

The case 610a is made from an insulating material such as plastic like polyimide, glass epoxy substrate and quartz.

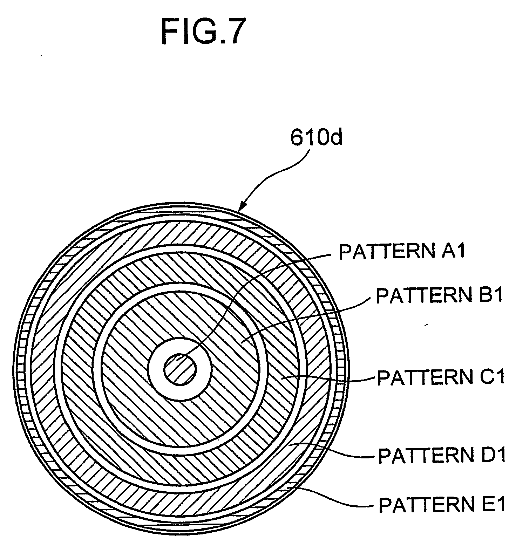

As shown in FIGs. 6 and 7, a pattern A1 composing the electrode of the position detector 610 (hereinafter referred to simply as "pattern") is provided at the inner surface of the center of the case lower-half portion 610d. The outer peripheral portion of the pattern A1 is formed into a circular shape.

A pattern B1 is provided at the outer periphery side of the pattern A1 on the inner surface at the center of the case lower-half portion 610d. The inner peripheral portion of the pattern B1 is formed into a circular shape concentrically with the outer peripheral portion of the pattern A1 while leaving a gap from the outer peripheral portion of the pattern A1. The outer peripheral portion of the pattern B1 is formed into a circular shape concentrically with the inner peripheral portion of the pattern B1 while leaving a gap from the inner peripheral portion of the pattern B1. That is, the pattern B1 is formed into the shape of ring.

A pattern C1 is provided at the outer periphery side of the pattern B1 on the inner surface at the center of the case lower-half portion 610d. The inner peripheral portion of the pattern C1 is formed into a circular shape concentrically with the outer peripheral portion of the pattern B1 while leaving a gap from the outer peripheral portion of the pattern B1. The outer peripheral portion of the pattern C1 is formed into a circular shape concentrically with the inner peripheral portion of the pattern C1 while leaving a gap from the inner peripheral portion of the pattern C1. That is, the pattern C1 is formed into the shape of ring.

A pattern D1 is provided at the outer periphery side of the pattern C1 on the inner surface at the center of the case lower-half portion 610d. The inner peripheral portion of the pattern D1 is formed into a circular shape concentrically with the outer peripheral portion of the pattern C1 while leaving a gap from the outer peripheral portion of the pattern C1. The outer peripheral portion of the pattern D1 is formed into a circular shape concentrically with the inner peripheral portion of the pattern D1 while leaving a gap from the inner peripheral portion of the pattern D1. That is, the pattern D1 is formed into the shape of ring.

A pattern E1 is provided at the outer periphery side of the pattern D1 on the inner surface at the center of the case lower-half portion 610d. The inner peripheral portion of the pattern E1 is formed into a circular shape concentrically with the outer peripheral portion of the pattern D1 while leaving a gap from the outer peripheral portion of the pattern D1. The outer peripheral portion of the pattern E1 is formed into a circular shape concentrically with the inner peripheral portion of the pattern E1 while leaving a gap from the inner peripheral portion of the pattern E1. That is, the pattern E1 is formed into the shape of ring.

Patterns A2, B2, C2, D2 and E2 are formed on the case upper-half portion 610u in the same manner with the shape of the patterns A1, B1, C1, D1 and E1 on the case lower-half portion 610d. That is, the outer peripheral portion of the pattern A2 is formed into the circular shape and the patterns B2, C2, D2 and E2 are formed into the shape of ring. Then, the shapes of the patterns A1, B1, C1, D1 and E1 on the case lower-half portion 610d are almost the same with the shapes of the patterns A2, B2, C2, D2 and E2 on the case upper-half portion 610u, respectively.

As described above, the respective patterns A1, B1, C1, D1, E1, A2, B2, C2, D2 and E2 are insulated from each other.

According to the embodiment of the mechanical watch comprising the inventive position detector, the position detector 610 is disposed with respect to the main plate 102 so that the x-axis line and y-axis line run in parallel with the surface of the main plate 102 and in parallel with the surface of the dial 104. Accordingly, the position detector 610 is arranged with respect to the main plate 102 so that the z-axis line runs vertically to the surface of the main plate 102 and vertically to the surface of the dial 104.

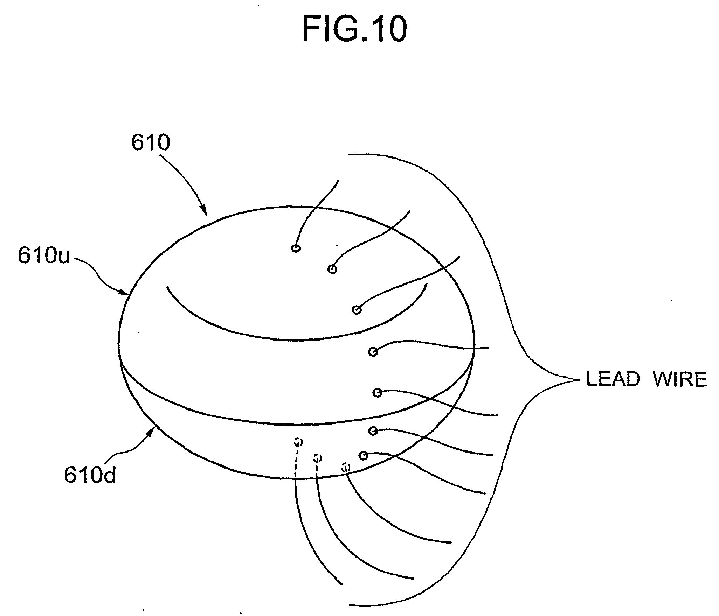

As shown in FIG. 10, lead wires for transmitting signals from the patterns are connected to the respective patterns A1, B1, C1, D1, E1, A2, B2, C2, D2 and E2.

Conductive fluid 608 is stored in the case 610a as shown in FIG. 6. The conductive fluid 608 is mercury for instance. Although the volume of the conductive fluid 608 is 1/28 of the volume of the case 610a in the case shown in FIG. 6, it is preferable to be 1/50 to 1/10 of the volume of the case 610a. The volume of the conductive fluid 608 is determined so that it is able to contact with two or three patterns.

The conductive fluid 608 contacts with the pattern A1 and pattern B1 in the horizontal state as shown in FIG. 6. Accordingly, the pattern A1 and the pattern B1 are short-circuited by the conductive fluid 608 in the state shown in FIG. 6 (that is, they conduct from each other).

That is, FIG. 6 shows the state of the position detector 610 when the mechanical watch comprising the inventive position detector is disposed in the "flat position".

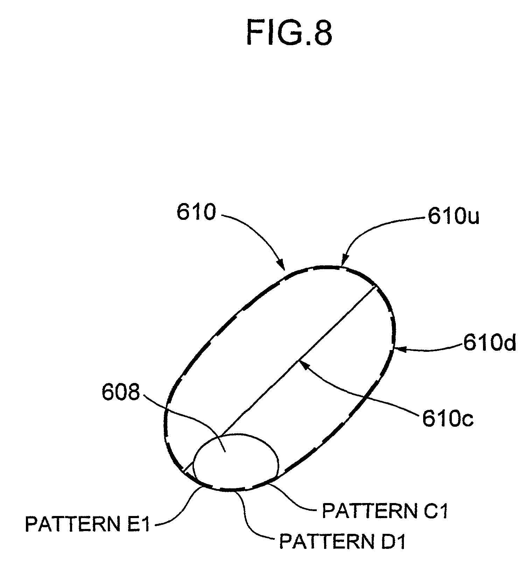

Next, when the position detector 610 is disposed by tilting by 45 degrees with respect to the horizontal plane as shown in FIG. 8, the conductive fluid 608 contacts with the pattern C1, pattern D1 and pattern E1. Accordingly, the pattern C1, pattern D1 and pattern E1 are short-circuited by the conductive fluid 608 in the state shown in FIG. 8 (that is, they conduct from each other).

That is, FIG. 8 shows the state of the position detector 610 when the mechanical watch comprising the inventive position detector is disposed in the "slanted position".

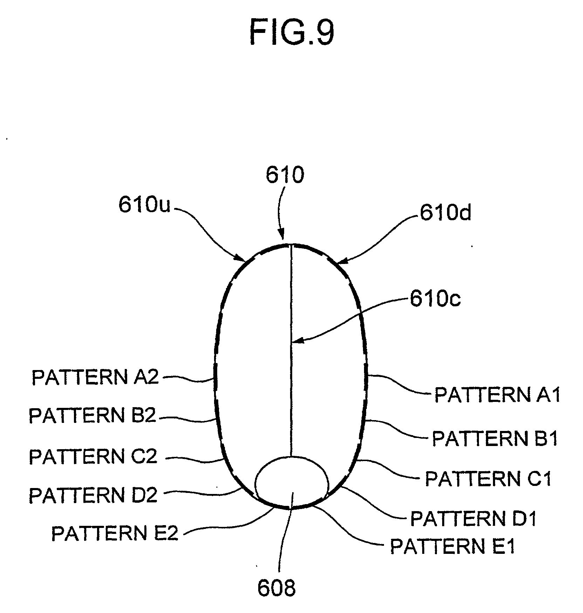

Next, when the position detector 610 is disposed so that it becomes 90 degrees (vertically) with respect to the horizontal plane as shown in FIG. 9, the conductive fluid 608 contacts with the pattern E1 and pattern E2. Accordingly, the pattern E1 and pattern E2 are short-circuited by the conductive fluid 608 in the state shown in FIG. 8 (that is, they conduct from each other).

That is, FIG. 9 shows the state of the position detector 610 when the mechanical watch comprising the inventive position detector is disposed in the "erected position".

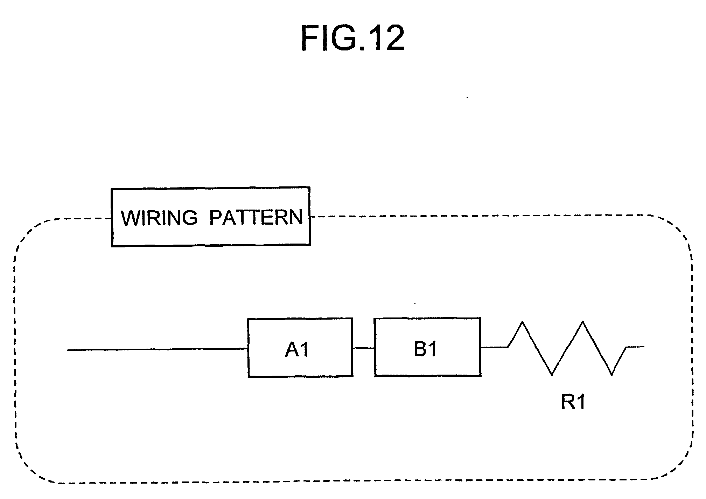

In FIG. 12, a wiring pattern is formed so that a resistor R1 is connected with the pattern A1 and pattern B1 in series when the pattern A1 conducts with the pattern B1 in the circuit block 606 in the state shown in FIG. 12. Then, in the state shown in FIG. 12, the resistor R1 is connected in series with the four coils 180, 180a, 180b and 180c by the wiring pattern.

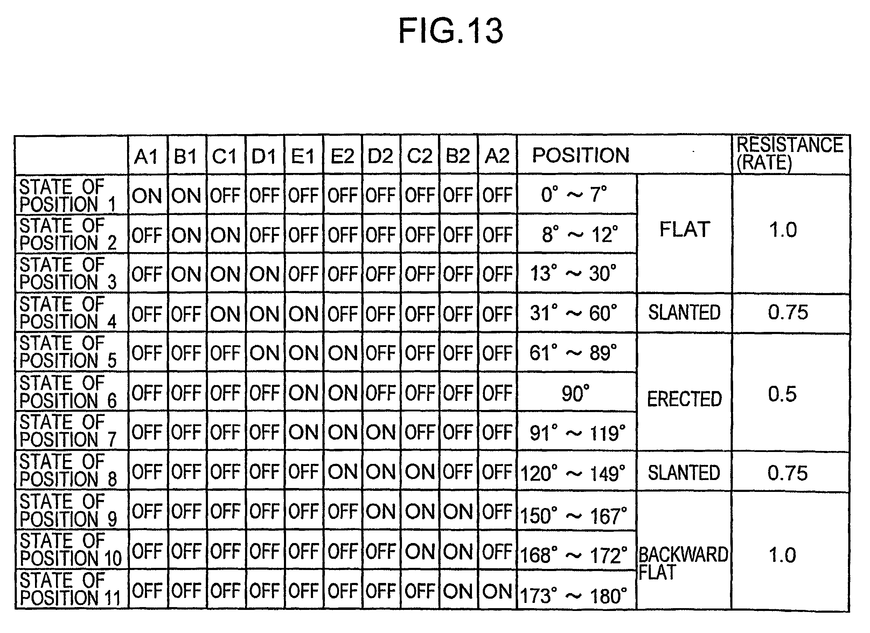

FIG. 13 shows the relationship between the various pattern conductive states and values of the resistor provided in the circuit in the first embodiment of the inventive position detector.

In FIG. 13, A1, B1, C1, D1, E1, A2, B2, C2, D2 and E2 represent the pattern A1, pattern B1, pattern C1, pattern D1, pattern E1, pattern A2, pattern B2, pattern C2, pattern D2 and pattern E2, respectively. "ON" indicates that the very pattern is in the conductive state with another pattern described as "ON". "OFF" indicates that the very pattern is not in the conductive state with any other pattern. (3.1) State of Position 1:

The state of position 1 in FIG. 13 corresponds to the state in which the mechanical watch comprising the inventive position detector is in the "flat position".

The state of position 1 corresponds to the state in which the mechanical watch comprising the inventive position detector is in the range of 0 to 7 degrees with respect to the horizontal plane.

In the state of position 1, the pattern A1 and the pattern B1 conduct from each other and the resistor R1 is connected in series with the pattern A1 and pattern B1 in the circuit block 606. Then, in the state of position 1, the resistor R1 is connected in series with the four coils 180, 180a, 180b and 180c by the wiring pattern. The value of the resistor R1 at this time is set as a reference value Rref (ohm).

When a combined value of resistance of the four coils 180, 180a, 180b and 180c is 1.7 kohm, the reference value Rref is 1.2 kohm for instance.

### (3.2) State of Position 2:

The state of position 2 in FIG. 13 corresponds to the state in which the mechanical watch comprising the inventive position detector is in the "flat position".

The state of position 2 corresponds to the state in which the mechanical watch comprising the inventive position detector is in the range of 8 to 12 degrees with respect to the horizontal plane.

In the state of position 2, the pattern B1 and the pattern C1 conduct from each other and the resistor R1 is connected in series with the pattern B1 and pattern C1 in the circuit block 606. Then, in the state of position 2, the resistor R1 is connected in series with the four coils 180, 180a, 180b and 180c by the wiring pattern.

### (3.3) State of Position 3:

The state of position 3 in FIG. 13 corresponds to the state in which the mechanical watch comprising the inventive position detector is in the "flat position".

The state of position 3 corresponds to the state in which the mechanical watch comprising the inventive position detector is in the range of 13 to 30 degrees with respect to the horizontal plane.

In the state of position 3, the pattern B1, pattern C1 and the pattern D1 conduct from each other and the resistor R1 is connected in series with the pattern B1, pattern C1 and pattern D1 in the circuit block 606. Then, in the state of position 1, the resistor R1 is connected in series with the four coils 180, 180a, 180b and 180c by the wiring pattern.

### (3.4) State of Position 4:

The state of position 4 in FIG. 13 corresponds to the state in which the mechanical watch comprising the inventive position detector is in the "slanted position".

The state of position 4 corresponds to the state in which the mechanical watch comprising the inventive position detector is in the range of 31 to 60 degrees with respect to the horizontal plane.

In the state of position 4, the pattern C1, pattern D1 and the pattern E1 conduct from each other and the resistor R2 is connected in series with the pattern C1, pattern D1 and pattern E1 in the circuit block 606. Then, in the state of position 4, the resistor R2 is connected in series with the four coils 180, 180a, 180b and 180c by the wiring pattern. The value of the resistor R2 at this time is set so that it becomes 0.75 times of the reference value Rref (ohm) (that is, 0.75 x Rref).

### (3.5) State of Position 5:

The state of position 5 in FIG. 13 corresponds to the state in which the mechanical watch comprising the inventive position detector is in the "erected position".

The state of position 5 corresponds to the state in which the mechanical watch comprising the inventive position detector is in the range of 61 to 89 degrees with respect to the horizontal plane.

In the state of position 5, the pattern D1, pattern E1 and the pattern E2 conduct from each other and the resistor R3 is connected in series with the pattern D1, pattern E1 and pattern E2 in the circuit block 606. Then, in the state of position 5, the resistor R3 is connected in series with the four coils 180, 180a, 180b and 180c by the wiring pattern. The value of the resistor R3 at this time is set so that it becomes 0.5 times of the reference value Rref (ohm) (that is, 0.5 x Rref).

### (3.6) State of Position 6:

The state of position 6 in FIG. 13 corresponds to the state in which the mechanical watch comprising the inventive position detector is in the "erected position".

The state of position 6 corresponds to the state in which the mechanical watch comprising the inventive position detector is in 90 degrees with respect to the horizontal plane. That is, it corresponds to the state in which the mechanical watch is disposed vertically.

In the state of position 6, the pattern E1 and pattern E2 conduct from each other and the resistor R2 is connected in series with the pattern E1 and pattern E2 in the circuit block 606. Then, in the state of position 6, the resistor R3 is connected in series with the four coils 180, 180a, 180b and 180c by the wiring pattern. The value of the resistor R3 at this time is set so that it becomes 0.5 times of the reference value Rref (ohm) (that is, 0.5 x Rref).

### (3.7) State of Position 7:

The state of position 7 in FIG. 13 corresponds to the state in which the mechanical watch comprising the inventive position detector is in the "erected position".

The state of position 7 corresponds to the state in which the mechanical watch comprising the inventive position detector is in the range of 91 to 119 degrees with respect to the horizontal plane.

In the state of position 7, the pattern E1, pattern E2 and pattern D2 conduct from each other and the resistor R3 is connected in series with the pattern E1, pattern E2 and pattern D2 in the circuit block 606. Then, in the state of position 7, the resistor R3 is connected in series with the four coils 180, 180a, 180b and 180c by the wiring pattern. The value of the resistor R3 at this time is set so that it becomes 0.5 times of the reference value Rref (ohm) (that is, 0.5 x Rref).

### (3.8) State of Position 8:

The state of position 8 in FIG. 13 corresponds to the state in which the mechanical watch comprising the inventive position detector is in the "slanted position".

The state of position 8 corresponds to the state in which the mechanical watch comprising the inventive position detector is in the range of 120 to 149 degrees with respect to the horizontal plane.

In the state of position 8, the pattern E2, pattern D2 and pattern C2 conduct from each other and the resistor R2 is connected in series with the pattern E2, pattern D2 and pattern C2 in the circuit block 606. Then, in the state of position 8, the resistor R2 is connected in series with the four coils 180, 180a, 180b and 180c by the wiring pattern. The value of the resistor R2 at this time is set so that it becomes 0.75 times of the reference value Rref (ohm) (that is, 0.75 x Rref).

### (3.9) State of Position 9:

The state of position 9 in FIG. 13 corresponds to the state in which the mechanical watch comprising the inventive position detector is in the "backward flat position".

The state of position 9 corresponds to the state in which the mechanical watch comprising the inventive position detector is in the range of 150 to 167 degrees with respect to the horizontal plane.

In the state of position 9, the pattern D2, pattern C2 and pattern B2 conduct from each other and the resistor R1 is connected in series with the pattern D2, pattern C2 and pattern B2 in the circuit block 606. Then, in the state of position 9, the resistor R1 is connected in series with the four coils 180, 180a, 180b and 180c by the wiring pattern. The value of the resistor R1 at this time is set so that it becomes the reference value Rref.

### (3.10) State of Position 10:

The state of position 10 in FIG. 13 corresponds to the state in which the mechanical watch comprising the inventive position detector is in the "backward flat position".

The state of position 10 corresponds to the state in which the mechanical watch comprising the inventive position detector is in the range of 168 to 172 degrees with respect to the horizontal plane.

In the state of position 10, the pattern C2 and pattern B2 conduct from each other and the resistor R1 is connected in series with the pattern C2 and pattern B2 in the circuit block 606. Then, in the state of position 10, the resistor R1 is connected in series with the four coils 180, 180a, 180b and 180c by the wiring pattern. The value of the resistor R1 at this time is set so that it becomes the reference value Rref.

### (3.11) State of Position 11:

The state of position 11 in FIG. 13 corresponds to the state in which the mechanical watch comprising the inventive position detector is in the "backward flat position".

The state of position 11 corresponds to the state in which the mechanical watch comprising the inventive position detector is in the range of 173 to 180 degrees with respect to the horizontal plane.

In the state of position 11, the pattern B2 and pattern A2 conduct from each other and the resistor R1 is connected in series with the pattern B2 and pattern A2 in the circuit block 606. Then, in the state of position 11, the resistor R1 is connected in series with the four coils 180, 180a, 180b and 180c by the wiring pattern. The value of the resistor R1 at this time is set so that it becomes the reference value Rref.

### (3.12) Table in Other Embodiments:

It is possible to create a table showing the relationship between the various pattern-to-pattern conductive states and the value of resistor provided in the circuit block also in other embodiments of the inventive position detector. Accordingly, it is possible to determine the wiring of the circuit block and the value of the resistor in the same manner with the contents in FIG. 13 also for the other embodiments of the position detector.

### (4) Operation of Balance when Coils are not Conductive:

The operation of the balance 140 when the coils 180, 180a, 180b and 180c are not conductive, i.e., when the circuit is open, will be explained with reference to FIGs. 3, 4 and 11.

The hair spring 140c expands/contracts in the radial direction of the hair spring 140c in correspondence to the angle of rotation of the balance 140. For instance, when the balance 140 rotates clockwise in the state shown in FIG. 3, the hair spring 140c contracts in the direction heading to the center of the balance 140. When the balance 140 rotates counterclockwise in contrary, the hair spring 140c expands in the direction separated from the center of the balance 140.

Therefore, when the balance 140 rotates clockwise in FIG. 3, the hair spring 140c operates so as to approach to the second contact member 168b. When the balance 140 rotates counterclockwise in contrary, the hair spring 140c operates so as to approach to the first contact member 168a.

When the rotational angle (swing angle) of the balance 140 is a certain threshold value, e.g., below 180 degrees, the hair spring 140c does not contact with the first contact member 168a nor the second contact member 168b because the expansion/contraction in the radial direction of the hair spring 140c is small.

When the rotational angle (swing angle) of the balance 140 is a certain threshold value, e.g., 180 degrees or more, the hair spring 140c contacts with the both of the first contact member 168a and the second contact member 168b because the expansion/contraction of the hair spring 140c in the radial direction is fully large.

For instance, a portion 140ct close to the outer edge of the hair spring 140c is located at the middle of the gap of about 0.04 mm between the first contact member 168a and the second contact member 168b. Accordingly, the portion 140ct close to the outer edge of the hair spring 140c does not contact with the first contact member 168a nor the second contact member 168b in the state in which the swing angle of the balance 140 is within the range exceeding 0 degree and below 180 degrees. That is, because the outer edge of the hair spring 140c does not contact with the first contact member 168a nor the second contact member 168b, the coils 180, 180a, 180b and 180c do not conduct and the magnetic flux of the balance magnet 140e does not affect the coils 180, 180a, 180b and 180c. As a result, the swing angle of the balance 140 is not attenuated by the effect of the balance magnet 140e and the coils 180, 180a, 180b and 180c.

### (5) Operation of Balance when Coils are conductive:

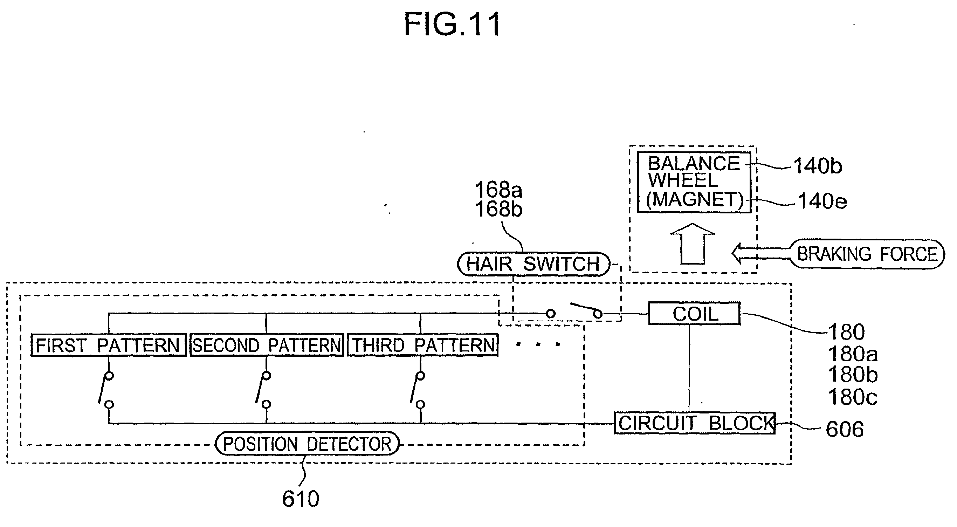

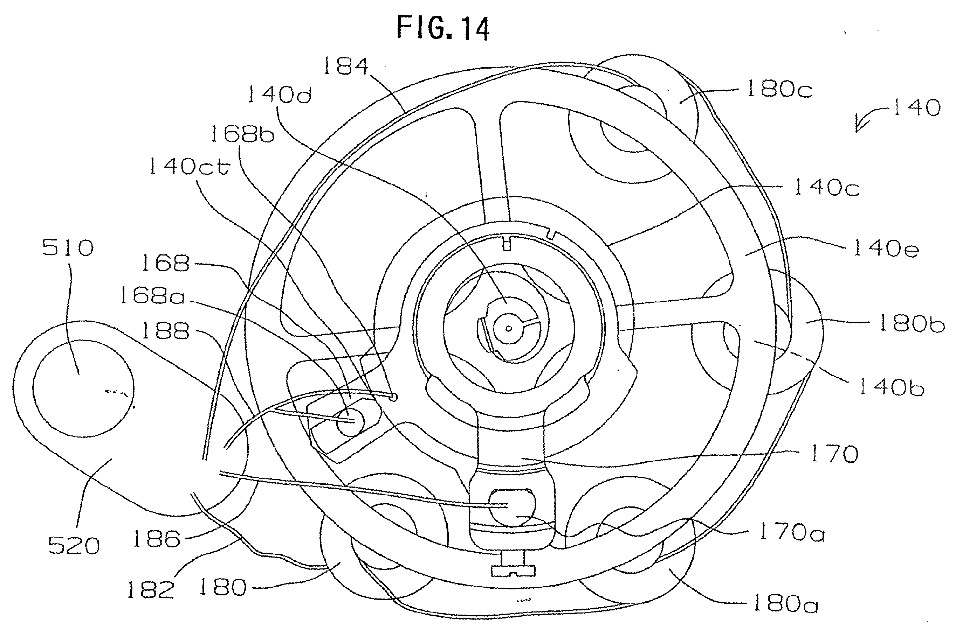

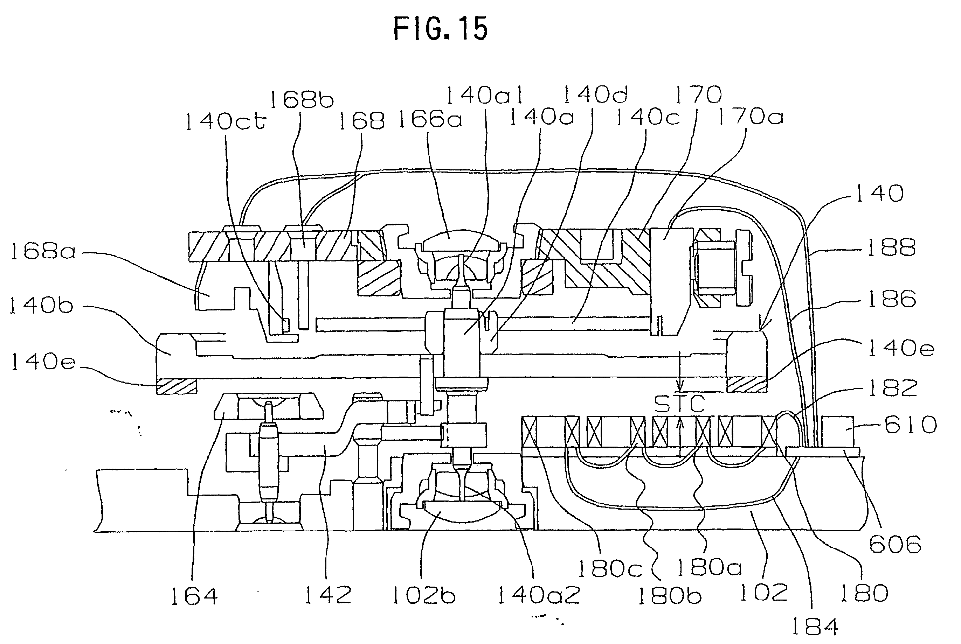

Next, the operation of the balance 140 when the coils 180, 180a, 180b and 180c are conductive, i.e., when the circuit is closed, will be explained with reference to FIGs. 11, 14 and 15. That is, FIGs. 14 and 15 show the state in which the swing angle of the balance 140 is 180 degrees or more.

It is noted that the thickness of the hair spring 140c (thickness in the radial direction of the balance) is exaggerated in FIG. 15.

When the swing angle of the balance 140 exceeds 180 degrees, the portion 140ct close to the outer edge of the hair spring 140c contacts with the first contact member 168a or the second contact member 168b. In this state, the coils 180, 180a, 180b and 180c conduct and exert such force that suppresses the rotational motion of the balance 140 to the balance 140 by inductive current generated by the change of magnetic flux of the balance magnet 140e. Then, the swing angle of the balance 140 is reduced by applying the braking force which suppresses the rotation of the balance 140 to the balance 140 by this effect.

Then, when the swing angle of the balance 140 is reduced to the range over 0 degree and below 180 degrees, the portion 140ct close to the outer edge of the hair spring 140c is put into the state in which it does not contact with the first contact member 168a nor the second contact member 168b. Accordingly, because the outer edge of the hair spring 140c does not contact with the first contact member 168a nor the second contact member 168b, the coils 180, 180a, 180b and 180c do not conduct and the magnetic flux of the balance magnet 140e does not affect the coils 180, 180a, 180b and 180c as shown in FIGS. 3 and 4.

The resistor R1 is connected in series with the four coils 180, 180a, 180b and 180c when the coils 180, 180a, 180b and 180c are conductive, i.e., when the circuit is closed, in the state in which the mechanical watch comprising the inventive position detector is in the "flat position". Accordingly, the coils 180, 180a, 180b and 180c conduct with the resistor R1 in such state. Then, the force that suppresses the rotational motion of the balance 140 is exerted to the balance 140 by the induction current generated by the change of the magnetic flux of the balance magnet 140e. That is, the braking force of magnitude corresponding to the value of resistor Rref (ohm) is applied to the balance 140 and the swing angle of the balance 140 is reduced to suppress the rotation of the balance 140.

The resistor R2 is connected in series with the four coils 180, 180a, 180b and 180c in the state in which the mechanical watch comprising the inventive position detector is not in the "flat position", "backward flat position" nor "erected position" when the coils 180, 180a, 180b and 180c are conductive, i.e., when the circuit is closed. The value of the resistor R2 at this time is 0.75 times of the reference value Rref (that is, 0.75 x Rref).

The coils 180, 180a, 180b and 180c conduct with the resistor R2 in such state. Then, the force that suppresses the rotational motion of the balance 140 is exerted to the balance 140 by the induction current which is generated by the change of magnetic flux of the balance magnet 140e. That is, the braking force of magnitude corresponding to the value of resistor 0.75 x Rref (ohm) is applied to the balance 140 and the swing angle of the balance 140 is reduced to suppress the rotation of the balance 140.

The mechanical watch comprising the inventive position detector is arranged such that the braking force in the state in which the mechanical watch is not "erected position", "flat position" nor "backward flat position" becomes smaller than the braking force in the state in which the mechanical watch comprising the inventive position detector is in the "flat position" and "backward flat position" by setting the values of the resistors as described above. Further, the mechanical watch comprising the inventive position detector is arranged such that the braking force in the state in which the mechanical watch is not in the "erected position", "flat position" nor "backward flat position" is greater than the braking force in the state in which the mechanical watch comprising the inventive position detector is in the "erected position".

The resistor R3 is connected in series with the four coils 180, 180a, 180b and 180c in the state in which the mechanical watch comprising the inventive position detector is in the "erected position" when the coils 180, 180a, 180b and 180c are conductive, i.e., when the circuit is closed. The value of the resistor R3 at this time is 0.5 times of the reference value Rref (that is, 0.5 x Rref).

The coils 180, 180a, 180b and 180c conduct with the resistor R3 in such state. Then, the force that suppresses the rotational motion of the balance 140 is exerted to the balance 140 by the induction current which is generated by the change of magnetic flux of the balance magnet 140e. That is, the braking force of magnitude corresponding to the value of resistor 0.5 x Rref (ohm) is applied to the balance 140 and the swing angle of the balance 140 is reduced to suppress the rotation of the balance 140.

The mechanical watch comprising the inventive position detector is arranged such that the braking force in the state in which the mechanical watch is in the "erected position" becomes smaller than the braking force in the state in which the mechanical watch comprising the inventive position detector is in the "flat position" and the "backward flat position" by setting the values of the resistors as described above.

The mechanical watch comprising the inventive position detector constructed as described above is able to control the rotational angle of the balance 140 very accurately in correspondence to various positions of the mechanical watch.

Because the present invention enables to control the rotational angle of the balance in correspondence to various positions of the mechanical watch in the mechanical watch comprising the balance in which the escape and governor repeats right and left turns, the escape wheel & pinion which rotates based on the rotation of the front wheel train and the pallet fork which controls the rotation of the escape wheel & pinion based on the operation of the balance, it is possible to enhance the accuracy of the mechanical watch without reducing the duration of the mechanical watch.

That is, the change of the instantaneous rate is suppressed and the advance and delay of the watch per day is reduced by keeping the swing angle constant by controlling the balance rotational angle in correspondence to various positions of the mechanical watch by noticing on the correlation between the instantaneous rate and the swing angle.

In contrary, the swing angle changes as time elapses due to the relationship between the duration and the swing angle in the prior art mechanical watch. Further, the instantaneous rate changes as time elapses due to the relationship between the swing angle and the instantaneous rate. Still more, the instantaneous rate changes as time elapses due to the relationship between the position of the mechanical watch and the instantaneous rate.

Therefore, it has been difficult to prolong the duration of the mechanical watch which can keep certain accuracy.

### (5) Second Embodiment of Position Detector:

Next, a second embodiment of the inventive position detector, a position detector 620 in the embodiment of the mechanical watch comprising the inventive position detector will be explained.

In the explanation below, the points of the second embodiment of the inventive position detector different from the first embodiment of the inventive position detector will be mainly described. Accordingly, the explanation of the first embodiment of the inventive position detector described above will be applied to the parts other than the contents described below.

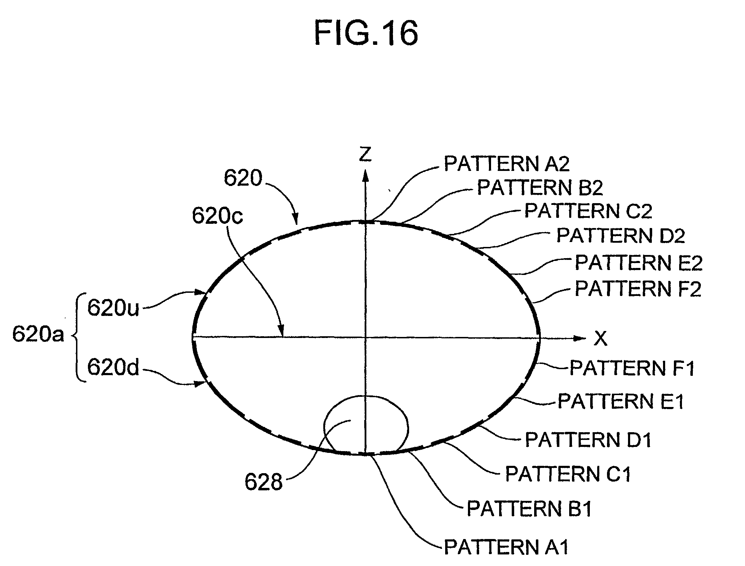

As shown in FIG. 16, the position detector 620 has a case 620a whose shape seen from the top is almost circular and whose shape seen from the side, i.e., the longitudinal section of the center part, is almost "oval".

The "oval" defined here includes shapes which are geometrically oval and shapes which is close to oval in which the thickness in the z-axis line direction is smaller than the thickness in the x-axis line direction and is smaller than the thickness in the y-axis line direction.

The case 620a is formed symmetrically in the vertical direction about a center plane 620c. That is, the case 620a comprises a case upper-half portion 620u and a case lower-half portion 620d. Accordingly, the case 620a is formed such that the case upper-half portion 620u and the case lower-half portion 620d are symmetrical about the center flat plane 620c. That is, the case upper-half portion 620u and the case lower-half portion 620d are formed in the same dimension and shape.

The small and thin position detector 620 may be realized by forming the case 620a whose shape seen from the side is almost oval as described above.

In FIG. 16, an x-axis line (the right direction is set as the positive direction in FIG. 16) and a y-axis line (the direction vertical to the surface of the paper and heading from the front to the back of the surface of the paper is set as the positive direction in FIG. 16) are defined in the horizontal direction and a z-axis line (the upper direction in FIG. 16 is set as the positive direction) is defined in the direction vertical to the x-axis line and y-axis line.

The shape of the case 620a at the plane containing the x-axis line and y-axis line, i.e., the shape of the transverse section at the center part, is almost circular and the shape thereof at the plane containing the x-axis line and z-axis line, i.e., the shape of the longitudinal section at the center part, is almost oval.

The case 620a is made from an insulating material such as plastic like polyimide, glass epoxy substrate and quartz.

As shown in FIG. 16, a pattern A1 composing the electrode of the position detector 620 is provided at the inner surface of the center of the case lower-half portion 620d. The outer peripheral portion of the pattern A1 is formed into a circular shape.

A pattern B1 is provided at the outer periphery side of the pattern A1 on the inner surface at the center of the case lower-half portion 620d. The inner peripheral portion of the pattern B1 is formed into a circular shape concentrically with the outer peripheral portion of the pattern A1 while leaving a gap from the outer peripheral portion of the pattern A1. The outer peripheral portion of the pattern B1 is formed into a circular shape concentrically with the inner peripheral portion of the pattern B1 while leaving a gap from the inner peripheral portion of the pattern B1. That is, the pattern B1 is formed into the shape of ring. The width of the pattern B1 in the radial direction is about two to four times of the diameter of the pattern A1.

A pattern C1 is provided at the outer periphery side of the pattern B1 on the inner surface at the center of the case lower-half portion 620d. The inner peripheral portion of the pattern C1 is formed into a circular shape concentrically with the outer peripheral portion of the pattern B1 while leaving a gap from the outer peripheral portion of the pattern B1. The outer peripheral portion of the pattern C1 is formed into a circular shape concentrically with the inner peripheral portion of the pattern C1 while leaving a gap from the inner peripheral portion of the pattern C1. That is, the pattern C1 is formed into the shape of ring. The width of the pattern C1 in the radial direction is about 0.3 to 0.7 times of the width of the pattern B1 in the radial direction.

A pattern D1 is provided at the outer periphery side of the pattern C1 on the inner surface at the center of the case lower-half portion 620d. The inner peripheral portion of the pattern D1 is formed into a circular shape concentrically with the outer peripheral portion of the pattern C1 while leaving a gap from the outer peripheral portion of the pattern C1. The outer peripheral portion of the pattern D1 is formed into a circular shape concentrically with the inner peripheral portion of the pattern D1 while leaving a gap from the inner peripheral portion of the pattern D1. That is, the pattern D1 is formed into the shape of ring. The width of the pattern D1 in the radial direction is about 0.8 to 1.2 times of the width of the pattern C1 in the radial direction.

A pattern E1 is provided at the outer periphery side of the pattern D1 on the inner surface at the center of the case lower-half portion 620d. The inner peripheral portion of the pattern E1 is formed into a circular shape concentrically with the outer peripheral portion of the pattern D1 while leaving a gap from the outer peripheral portion of the pattern D1. The outer peripheral portion of the pattern E1 is formed into a circular shape concentrically with the inner peripheral portion of the pattern E1 while leaving a gap from the inner peripheral portion of the pattern E1. That is, the pattern E1 is formed into the shape of ring. The width of the pattern E1 in the radial direction is about 2.0 to 2.4 times of the width of the pattern D1 in the radial direction.

A pattern F1 is provided at the outer periphery side of the pattern E1 on the inner surface at the center of the case lower-half portion 620d. The inner peripheral portion of the pattern F1 is formed into a circular shape concentrically with the outer peripheral portion of the pattern E1 while leaving a gap from the outer peripheral portion of the pattern E1. The outer peripheral portion of the pattern F1 is formed into a circular shape concentrically with the inner peripheral portion of the pattern F1 while leaving a gap from the inner peripheral portion of the pattern F1. That is, the pattern F1 is formed into the shape of ring. The width of the pattern F1 in the radial direction is about 0.6 to 1.0 times of the width of the pattern E1 in the radial direction.

Patterns A2, B2, C2, D2, E2 and F2 are formed on the case upper-half portion 620u in the same manner with the shape of the patterns A1, B1, C1, D1, E1 and F1 on the case lower-half portion 620d. That is, the outer peripheral portion of the pattern A2 is formed into the circular shape and the patterns B2, C2, D2, E2 and F2 are formed into the shape of ring. Then, the shapes of the patterns A1, B1, C1, D1, E1 and F1 on the case lower-half portion 620d are almost the same with the shapes of the patterns A2, B2, C2, D2, E2 and F2 on the case upper-half portion 620u, respectively.

As described above, the respective patterns A1, B1, C1, D1, E1, F1, A2, B2, C2, D2 E2 and F2 are insulated from each other.

According to the embodiment of the mechanical watch comprising the inventive position detector, the position detector 620 is disposed with respect to the main plate 102 so that the x-axis line and y-axis line run in parallel with the surface of the main plate 102 and in parallel with the surface of the dial 104. Accordingly, the position detector 620 is arranged with respect to the main plate 102 so that the z-axis line runs vertically to the surface of the main plate 102 and vertically to the surface of the dial 104.

Similarly to the lead wires shown in FIG. 10, lead wires (not shown) for transmitting signals from the patterns are connected to the respective patterns A1, B1, C1, D1, E1, F1, A2, B2, C2, D2, E2 and F2.

Conductive fluid 628 is stored in the case 620a as shown in FIG. 16. The conductive fluid 628 is mercury for instance. Although the volume of the conductive fluid 628 is 1/63 of the volume of the case 620a in the case shown in FIG. 16, it is preferable to be 1/80 to 1/40 of the volume of the case 620a. The volume of the conductive fluid 628 is determined so that it is able to contact with two or three patterns.

The conductive fluid 628 contacts with the pattern A1 and pattern B1 in the horizontal state as shown in FIG. 16. Accordingly, the pattern A1 and the pattern B1 are short-circuited by the conductive fluid 628 in the state shown in FIG. 16 (that is, they conduct from each other).

That is, FIG. 16 shows the state of the position detector 620 when the mechanical watch comprising the inventive position detector is disposed in the "flat position".

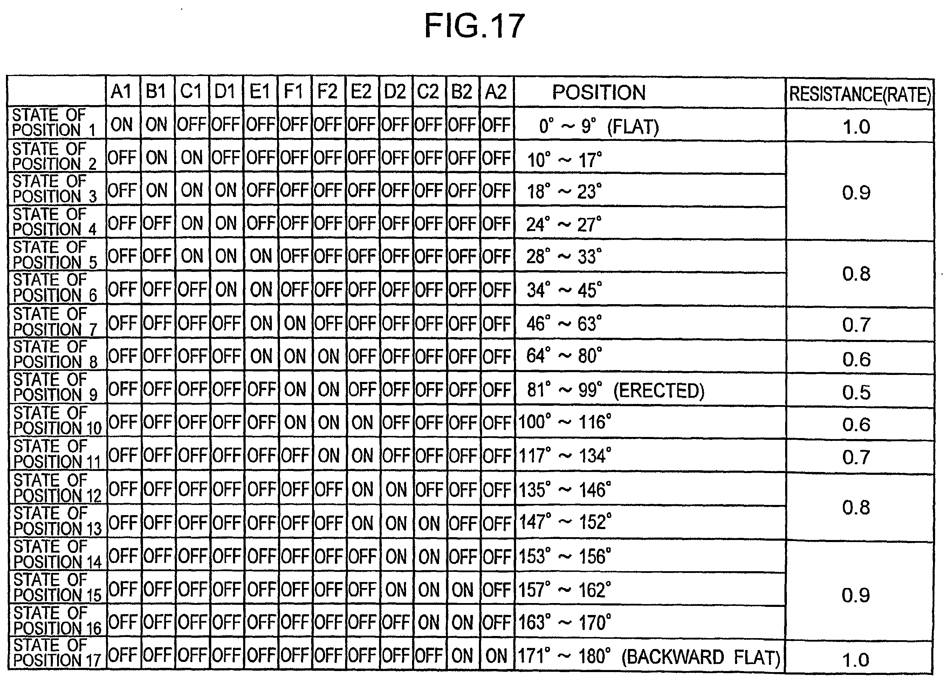

FIG. 17 shows the relationship between the various pattern-to-pattern conductive states and values of the resistor provided in the circuit in the second embodiment of the inventive position detector.

The items and contents described in FIG. 17 are the same with the items and contents in FIG. 13 described above.

### (5.1) State of Position 1:

The state of position 1 in FIG. 17 corresponds to the state in which the mechanical watch comprising the inventive position detector is in the "flat position".

The state of position 1 corresponds to the state in which the mechanical watch comprising the inventive position detector is in the range of 0 to 9 degrees with respect to the horizontal plane.

In the state of position 1, the pattern A1 and the pattern B1 conduct from each other and the resistor R1 is connected in series with the pattern A1 and pattern B1 in the circuit block 606. Then, in the state of position 1, the resistor R1 is connected in series with the four coils 180, 180a, 180b and 180c by the wiring pattern. The value of the resistor R1 at this time is set as a reference value Rref (ohm).

When a combined value of resistance of the four coils 180, 180a, 180b and 180c is 1.7 kohm, the reference value Rref is 1.2 kohm for instance.

### (5.2) State of Position 2:

The state of position 2 in FIG. 17 corresponds to the state in which the mechanical watch comprising the inventive position detector is in the range of 10 to 17 degrees with respect to the horizontal plane.

In the state of position 2, the pattern B1 and the pattern C1 conduct from each other and the resistor R2 is connected in series with the pattern B1 and pattern C1 in the circuit block 606. Then, in the state of position 2, the resistor R2 is connected in series with the four coils 180, 180a, 180b and 180c by the wiring pattern. The value of the resistor R2 at this time is set at 0.9 times of the reference value Rref (ohm) (that is, 0.9 x Rref).

### (5.3) State of Position 3:

The state of position 3 in FIG. 17 corresponds to the state in which the mechanical watch comprising the inventive position detector is in the range of 18 to 23 degrees with respect to the horizontal plane.

In the state of position 3, the pattern B1, pattern C1 and the pattern D1 conduct from each other and the resistor R2 is connected in series with the pattern B1, pattern C1 and pattern D1 in the circuit block 606. Then, in the state of position 3, the resistor R2 is connected in series with the four coils 180, 180a, 180b and 180c by the wiring pattern.

### (5.4) State of Position 4:

The state of position 4 in FIG. 17 corresponds to the state in which the mechanical watch comprising the inventive position detector is in the range of 24 to 27 degrees with respect to the horizontal plane.

In the state of position 4, the pattern C1 and pattern D1 conduct from each other and the resistor R2 is connected in series with the pattern C1 and pattern D1 in the circuit block 606. Then, in the state of position 4, the resistor R2 is connected in series with the four coils 180, 180a, 180b and 180c by the wiring pattern.

### (5.5) State of Position 5:

The state of position 5 in FIG. 17 corresponds to the state in which the mechanical watch comprising the inventive position detector is in the range of 28 to 33 degrees with respect to the horizontal plane.

In the state of position 5, the pattern C1, pattern D1 and the pattern E1 conduct from each other and the resistor R3 is connected in series with the pattern C1, pattern D1 and pattern E1 in the circuit block 606. Then, in the state of position 5, the resistor R3 is connected in series with the four coils 180, 180a, 180b and 180c by the wiring pattern. The value of the resistor R3 at this time is set so that it becomes 0.8 times of the reference value Rref (ohm) (that is, 0.8 x Rref).

### (5.6) State of Position 6:

The state of position 6 in FIG. 17 corresponds to the state in which the mechanical watch comprising the inventive position detector is in the range of 34 to 45 degrees with respect to the horizontal plane.

In the state of position 6, the pattern D1 and pattern E1 conduct from each other and the resistor R3 is connected in series with the pattern D1 and pattern E1 in the circuit block 606. Then, in the state of position 6, the resistor R3 is connected in series with the four coils 180, 180a, 180b and 180c by the wiring pattern.

### (5.7) State of Position 7:

The state of position 7 in FIG. 17 corresponds to the state in which the mechanical watch comprising the inventive position detector is in the range of 46 to 63 degrees with respect to the horizontal plane.

In the state of position 7, the pattern E1 and the pattern F1 conduct from each other and the resistor R4 is connected in series with the pattern E1 and pattern F1 in the circuit block 606. Then, in the state of position 7, the resistor R4 is connected in series with the four coils 180, 180a, 180b and 180c by the wiring pattern. The value of the resistor R4 at this time is set so that it becomes 0.7 times of the reference value Rref (ohm) (that is, 0.7 x Rref).

### (5.8) State of Position 8:

The state of position 8 in FIG. 17 corresponds to the state in which the mechanical watch comprising the inventive position detector is in the range of 64 to 80 degrees with respect to the horizontal plane.

In the state of position 8, the pattern E1, pattern F1 and pattern F2 conduct from each other and the resistor R5 is connected in series with the pattern E1, pattern F1 and pattern F2 in the circuit block 606. Then, in the state of position 8, the resistor R5 is connected in series with the four coils 180, 180a, 180b and 180c by the wiring pattern. The value of the resistor R5 at this time is set so that it becomes 0.6 times of the reference value Rref (ohm) (that is, 0.6 x Rref).

### (5.9) State of Position 9:

The state of position 9 in FIG. 17 corresponds to the state in which the mechanical watch comprising the inventive position detector is in the "erected position".

The state of position 9 corresponds to the state in which the mechanical watch comprising the inventive position detector is in the range of 81 to 99 degrees with respect to the horizontal plane.

In the state of position 9, the pattern F1 and pattern F2 conduct from each other and the resistor R6 is connected in series with the pattern F1 and pattern F2 in the circuit block 606. Then, in the state of position 9, the resistor R6 is connected in series with the four coils 180, 180a, 180b and 180c by the wiring pattern. The value of the resistor R6 at this time is set so that it becomes 0.5 times of the reference value Rref (ohm) (that is, 0.5 x Rref).

### (5.10) State of Position 10:

The state of position 10 in FIG. 17 corresponds to the state in which the mechanical watch comprising the inventive position detector is in the range of 100 to 116 degrees with respect to the horizontal plane.

In the state of position 10, the pattern F1, pattern F2 and pattern E2 conduct from each other and the resistor R5 is connected in series with the pattern F1, pattern F2 and pattern E2 in the circuit block 606. Then, in the state of position 10, the resistor R5 is connected in series with the four coils 180, 180a, 180b and 180c by the wiring pattern.

### (5.11) State of Position 11:

The state of position 11 in FIG. 17 corresponds to the state in which the mechanical watch comprising the inventive position detector is in the range of 117 to 134 degrees with respect to the horizontal plane.

In the state of position 11, the pattern F2 and pattern E2 conduct from each other and the resistor R4 is connected in series with the pattern F2 and pattern E2 in the circuit block 606. Then, in the state of position 11, the resistor R4 is connected in series with the four coils 180, 180a, 180b and 180c by the wiring pattern.

### (5.12) State of Position 12:

The state of position 12 in FIG. 17 corresponds to the state in which the mechanical watch comprising the inventive position detector is in the range of 135 to 146 degrees with respect to the horizontal plane.

In the state of position 12, the pattern E2 and pattern D2 conduct from each other and the resistor R3 is connected in series with the pattern E2 and pattern D2 in the circuit block 606. Then, in the state of position 12, the resistor R3 is connected in series with the four coils 180, 180a, 180b and 180c by the wiring pattern.

### (5.13) State of Position 13:

The state of position 13 in FIG. 17 corresponds to the state in which the mechanical watch comprising the inventive position detector is in the range of 147 to 152 degrees with respect to the horizontal plane.

In the state of position 13, the pattern E2, pattern D2 and pattern C2 conduct from each other and the resistor R3 is connected in series with the pattern E2, pattern D2 and pattern C2 in the circuit block 606. Then, in the state of position 13, the resistor R3 is connected in series with the four coils 180, 180a, 180b and 180c by the wiring pattern.

### (5.14) State of Position 14:

The state of position 14 in FIG. 17 corresponds to the state in which the mechanical watch comprising the inventive position detector is in the range of 153 to 156 degrees with respect to the horizontal plane.

In the state of position 14, the pattern D2 and pattern C2 conduct from each other and the resistor R2 is connected in series with the pattern D2 and pattern C2 in the circuit block 606. Then, in the state of position 14, the resistor R2 is connected in series with the four coils 180, 180a, 180b and 180c by the wiring pattern.

### (5.15) State of Position 15:

The state of position 15 in FIG. 17 corresponds to the state in which the mechanical watch comprising the inventive position detector is in the range of 157 to 162 degrees with respect to the horizontal plane.

In the state of position 15, the pattern D2, pattern C2 and pattern B2 conduct from each other and the resistor R2 is connected in series with the pattern D2, pattern C2 and pattern B2 in the circuit block 606. Then, in the state of position 15, the resistor R2 is connected in series with the four coils 180, 180a, 180b and 180c by the wiring pattern.

### (5.16) State of Position 16:

The state of position 16 in FIG. 17 corresponds to the state in which the mechanical watch comprising the inventive position detector is in the range of 163 to 170 degrees with respect to the horizontal plane.

In the state of position 16, the pattern C2 and pattern B2 conduct from each other and the resistor R2 is connected in series with the pattern C2 and pattern B2 in the circuit block 606. Then, in the state of position 16, the resistor R2 is connected in series with the four coils 180, 180a, 180b and 180c by the wiring pattern.

### (5.17) State of Position 17:

The state of position 17 in FIG. 17 corresponds to the state in which the mechanical watch comprising the inventive position detector is in the "backward flat position".

The state of position 17 corresponds to the state in which the mechanical watch comprising the inventive position detector is in the range of 171 to 180 degrees with respect to the horizontal plane.

In the state of position 17, the pattern B2 and pattern A2 conduct from each other and the resistor R1 is connected in series with the pattern B2 and pattern A2 in the circuit block 606. Then, in the state of position 17, the resistor R1 is connected in series with the four coils 180, 180a, 180b and 180c by the wiring pattern. The value of the resistor R1 at this time is set so that it becomes the reference value Rref (ohm).

### (6) Third Embodiment of Position Detector:

Next, a third embodiment of the inventive position detector, a position detector 630 in the embodiment of the mechanical watch comprising the inventive position detector will be explained.

In the explanation below, the points of the third embodiment of the inventive position detector different from the first embodiment of the inventive position detector will be mainly described. Accordingly, the explanation of the first embodiment of the inventive position detector described above will be applied to the parts other than the contents described below.

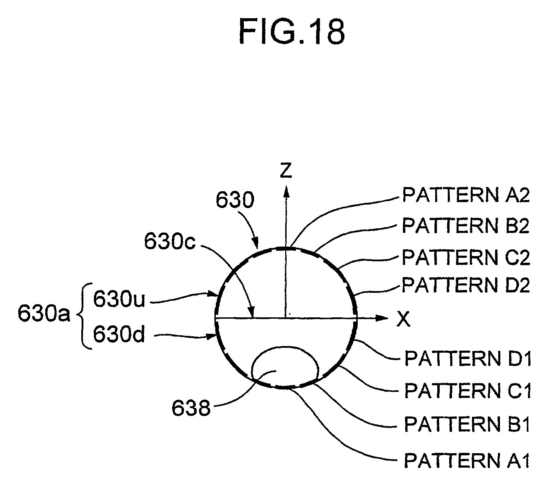

As shown in FIG. 18, the position detector 630 has a case 630a whose shape seen from the top is almost circular and whose shape seen from the side, i.e., the longitudinal section of the center part, is almost circular. Accordingly, the shape of the case 630a is almost spherical.

In FIG. 18, an x-axis line (the right direction is set as the positive direction in FIG. 18) and a y-axis line (the direction vertical to the surface of the paper and heading from the front to the back of the surface of the paper is set as the positive direction in FIG. 18) are defined in the horizontal direction and a z-axis line (the upper direction in FIG. 18 is set as the positive direction) is defined in the direction vertical to the x-axis line and y-axis line.

The "circular" defined here includes shapes which are geometrically true circle, shapes in which the thickness in the z-axis line direction is different more or less from the thickness in the x-axis line direction like a true circle, shapes in which the thickness in the z-axis line direction is different more or less from the thickness in the y-axis line direction and shapes in which the thickness in the x-axis line direction is different more or less from the thickness in the x-axis line direction.

The case 630a is formed symmetrically in the vertical direction about a center plane 630c. That is, the case 630a comprises a case upper-half portion 630u and a case lower-half portion 630d. Accordingly, the case 630a is formed such that the case upper-half portion 630u and the case lower-half portion 630d are symmetrical about the center flat plane 630c. That is, the case upper-half portion 630u and the case lower-half portion 630d are formed in the same dimension and shape.

The small position detector 630 may be realized by forming the case 630a whose shape is almost spherical as described above.

The case 630a is made from an insulating material such as plastic like polyimide, glass epoxy substrate and quartz.

As shown in FIG. 18, a pattern A1 composing the electrode of the position detector 630 is provided at the inner surface of the center of the case lower-half portion 630d. The outer peripheral portion of the pattern A1 is formed into a circular shape.

A pattern B1 is provided at the outer periphery side of the pattern A1 on the inner surface at the center of the case lower-half portion 630d. The inner peripheral portion of the pattern B1 is formed into a circular shape concentrically with the outer peripheral portion of the pattern A1 while leaving a gap from the outer peripheral portion of the pattern A1. The outer peripheral portion of the pattern B1 is formed into a circular shape concentrically with the inner peripheral portion of the pattern B1 while leaving a gap from the inner peripheral portion of the pattern B1. That is, the pattern B1 is formed into the shape of ring. The width of the pattern B1 in the radial direction is about 0.7 to 1.3 times of the diameter of the pattern A1.

A pattern C1 is provided at the outer periphery side of the pattern B1 on the inner surface at the center of the case lower-half portion 630d. The inner peripheral portion of the pattern C1 is formed into a circular shape concentrically with the outer peripheral portion of the pattern B1 while leaving a gap from the outer peripheral portion of the pattern B1. The outer peripheral portion of the pattern C1 is formed into a circular shape concentrically with the inner peripheral portion of the pattern C1 while leaving a gap from the inner peripheral portion of the pattern C1. That is, the pattern C1 is formed into the shape of ring. The width of the pattern C1 in the radial direction is about 1.3 to 2.0 times of the width of the pattern B1 in the radial direction.

A pattern D1 is provided at the outer periphery side of the pattern C1 on the inner surface at the center of the case lower-half portion 630d. The inner peripheral portion of the pattern D1 is formed into a circular shape concentrically with the outer peripheral portion of the pattern C1 while leaving a gap from the outer peripheral portion of the pattern C1. The outer peripheral portion of the pattern D1 is formed into a circular shape concentrically with the inner peripheral portion of the pattern D1 while leaving a gap from the inner peripheral portion of the pattern D1. That is, the pattern D1 is formed into the shape of ring. The width of the pattern D1 in the radial direction is about 0.8 to 1.2 times of the width of the pattern C1 in the radial direction.

Patterns A2, B2, C2 and D2 are formed on the case upper-half portion 630u in the same manner with the shape of the patterns A1, B1, C1 and D1 on the case lower-half portion 630d. That is, the outer peripheral portion of the pattern A2 is formed into the circular shape and the patterns B2, C2 and D2 are formed into the shape of ring. Then, the shapes of the patterns A1, B1, C1 and D1 on the case lower-half portion 630d are almost the same with the shapes of the patterns A2, B2, C2 and D2 on the case upper-half portion 630u, respectively.

As described above, the respective patterns A1, B1, C1, D1, A2, B2, C2 and D2 are insulated from each other.

According to the embodiment of the mechanical watch comprising the inventive position detector, the position detector 630 is disposed with respect to the main plate 102 so that the x-axis line and y-axis line run in parallel with the surface of the main plate 102 and in parallel with the surface of the dial 104. Accordingly, the position detector 630 is arranged with respect to the main plate 102 so that the z-axis line runs vertically to the surface of the main plate 102 and vertically to the surface of the dial 104.

Similarly to the lead wires shown in FIG. 10, lead wires (not shown) for transmitting signals from the patterns are connected to the respective patterns A1, B1, C1, D1 A2, B2, C2 and D2.

Conductive fluid 638 is stored in the case 630a as shown in FIG. 18. The conductive fluid 638 is mercury for instance. Although the volume of the conductive fluid 638 is 1/6.5 of the volume of the case 630a in the case shown in FIG. 18, it is preferable to be 1/3 to 1/10 of the volume of the case 630a. The volume of the conductive fluid 638 is determined so that it is able to contact with two or three patterns.

The conductive fluid 638 contacts with the pattern A1 and pattern B1 in the horizontal state as shown in FIG. 18. Accordingly, the pattern A1 and the pattern B1 are short-circuited by the conductive fluid 638 in the state shown in FIG. 18 (that is, they conduct from each other).

That is, FIG. 18 shows the state of the position detector 630 when the mechanical watch comprising the inventive position detector is disposed in the "flat position".

The relationship between the various pattern-to-pattern conductive states and values of the resistor provided in the circuit may be set (not shown) in the third embodiment of the inventive position detector similar to FIG. 17.

The items and contents described in FIG. 13 are the same with the items and contents in FIG. 13 described above.

### (6.1) State of Position 1:

The state of position 1 in FIG. 18 corresponds to the state in which the mechanical watch comprising the inventive position detector is in the "flat position".

The state of position 1 corresponds to the state in which the mechanical watch comprising the inventive position detector is disposed horizontally.

In the state of position 1, the pattern A1 and the pattern B1 conduct from each other and the resistor R1 is connected in series with the pattern A1 and pattern B1 in the circuit block 606. Then, in the state of position 1, the resistor R1 is connected in series with the four coils 180, 180a, 180b and 180c by the wiring pattern. The value of the resistor R1 at this time is set as a reference value Rref (ohm).

When a combined value of resistance of the four coils 180, 180a, 180b and 180c is 1.7 kohm, the reference value Rref is 1.2 kohm for instance.

### (6.2) State of Position 2:

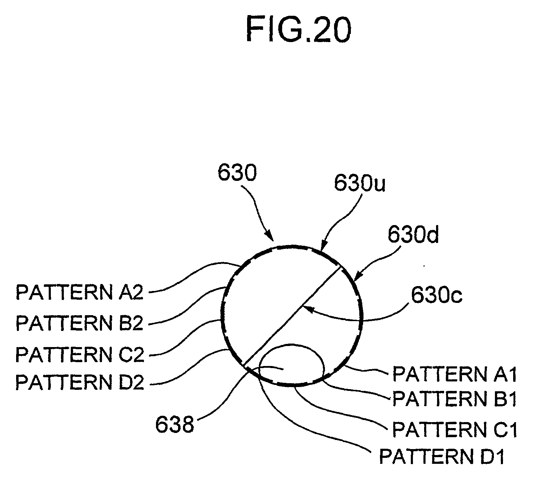

The state of position 2 in FIG. 20 corresponds to the state in which the mechanical watch comprising the inventive position detector is in the "slanted position".

The state of position 2 corresponds to the state in which the mechanical watch comprising the inventive position detector forms 45 degrees to the horizontal plane.

In the state of position 2, the pattern B1, pattern C1 and pattern D1 conduct from each other and the resistor R2 is connected in series with the pattern B1, pattern C1 and pattern D1 in the circuit block 606. Then, in the state of position 2, the resistor R2 is connected in series with the four coils 180, 180a, 180b and 180c by the wiring pattern. The value of the resistor R2 at this time is set so that it becomes 0.75 times of the reference value Rref (ohm) (that is, 0.75 x Rref).

### (6.3) State of Position 3:

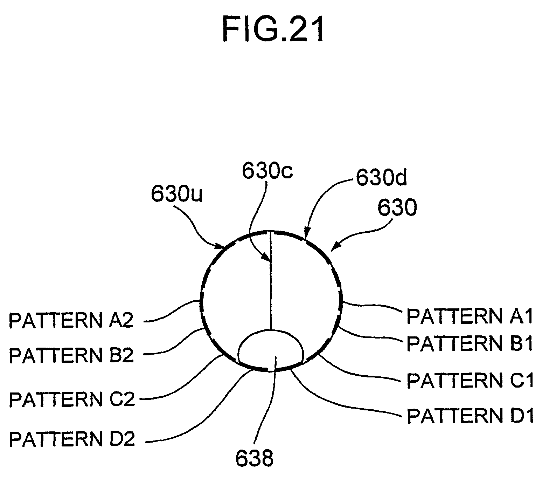

The state of position 3 in FIG. 21 corresponds to the state in which the mechanical watch comprising the inventive position detector is in the "erected position".

The state of position 3 corresponds to the state in which the mechanical watch comprising the inventive position detector is disposed vertically.

In the state of position 3, the pattern D1 and pattern D2 conduct from each other and the resistor R3 is connected in series with the pattern D1 and pattern D2 in the circuit block 606. Then, in the state of position 3, the resistor R3 is connected in series with the four coils 180, 180a, 180b and 180c by the wiring pattern. The value of the resistor R3 at this time is set so that it becomes 0.5 times of the reference value Rref (ohm) (that is, 0.5 x Rref).

### (7) Fourth Embodiment of Position Detector:

Next, a fourth embodiment of the inventive position detector and a position detector 640 in the embodiment of the mechanical watch comprising the inventive position detector will be explained.

In the explanation below, the points of the fourth embodiment of the inventive position detector different from the first embodiment of the inventive position detector will be mainly described. Accordingly, the explanation of the first embodiment of the inventive position detector described above will be applied to the parts other than the contents described below.

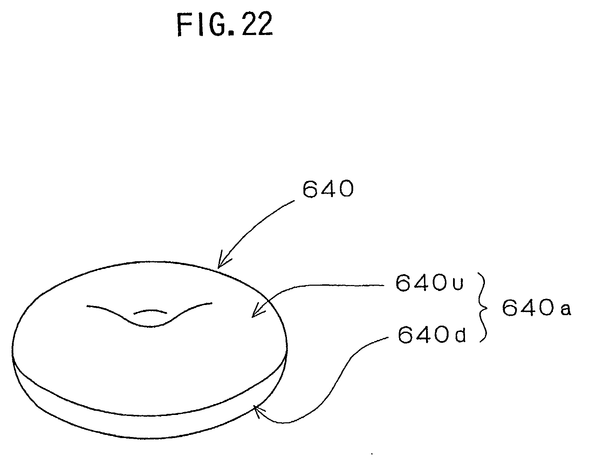

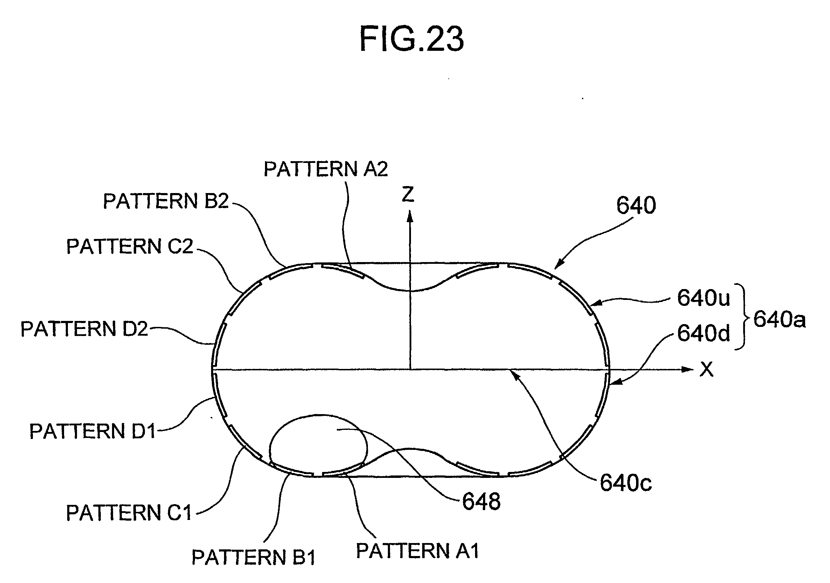

As shown in FIGs. 22 and 23, the position detector 640 has a case 640a whose shape seen from the top is almost circular and whose shape seen from the side, i. e., the longitudinal section of the center part, is almost "elliptic" and which has a narrow section around the center. That is, the shape of the case 640a seen from the side, i.e., the longitudinal section of the center part is the shape of "cocoon".

The case 640a is formed symmetrically in the vertical direction about a center plane 640c. That is, the case 640a comprises a case upper-half portion 640u and a case lower-half portion 640d. Accordingly, the case 640a is formed such that the case upper-half portion 640u and the case lower-half portion 640d are symmetrical about the center flat plane 640c. That is, the case upper-half portion 640u and the case lower-half portion 640d are formed in the same dimension and shape.

The small and thin position detector 640 may be realized by forming the case 640a whose shape seen from the side is almost the shape of cocoon as described above.

In FIG. 23, an x-axis line (the right direction is set as the positive direction in FIG. 23) and a y-axis line (the direction vertical to the surface of the paper and heading from the front to the back of the surface of the paper is set as the positive direction in FIG. 23) are defined in the horizontal direction and a z-axis line (the upper direction in FIG. 23 is set as the positive direction) is defined in the direction vertical to the x-axis line and y-axis line.

The shape of the case 640a at the plane containing the x-axis line and y-axis line, i.e., the shape of the transverse section at the center part, is almost circular and the shape thereof at the plane containing the x-axis line and z-axis line, i.e., the shape of the longitudinal section at the center part, is almost the shape of cocoon.

The case 640a is made from an insulating material such as plastic like polyimide, glass epoxy substrate and quartz.

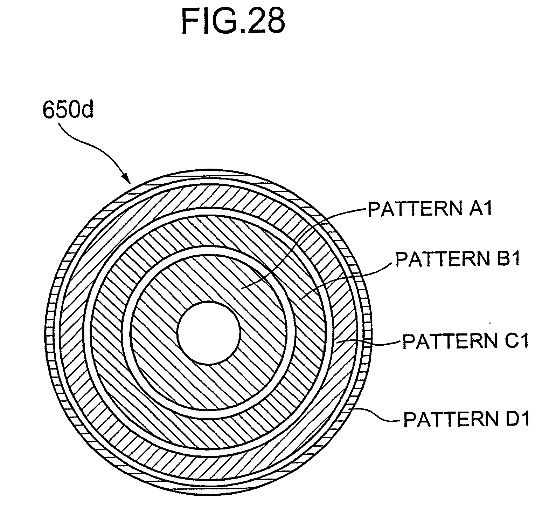

As shown in FIGs. 23 and 28, a pattern A1 composing the electrode of the position detector 640 is provided at the inner surface on the outside of the narrow section at the center of the case lower-half portion 640d. The pattern A1 is formed into the shape of ring.

A pattern B1 is provided at the outer periphery side of the pattern A1 on the inner surface at the center of the case lower-half portion 640d. The inner peripheral portion of the pattern B1 is formed into a circular shape concentrically with the outer peripheral portion of the pattern A1 while leaving a gap from the outer peripheral portion of the pattern A1. The outer peripheral portion of the pattern B1 is formed into a circular shape concentrically with the inner peripheral portion of the pattern B1 while leaving a gap from the inner peripheral portion of the pattern B1. That is, the pattern B1 is formed into the shape of ring. The width of the pattern B1 in the radial direction is about 0.7 to 1.3 times of the diameter of the pattern A1.

A pattern C1 is provided at the outer periphery side of the pattern B1 on the inner surface at the center of the case lower-half portion 640d. The inner peripheral portion of the pattern C1 is formed into a circular shape concentrically with the outer peripheral portion of the pattern B1 while leaving a gap from the outer peripheral portion of the pattern B1. The outer peripheral portion of the pattern C1 is formed into a circular shape concentrically with the inner peripheral portion of the pattern C1 while leaving a gap from the inner peripheral portion of the pattern C1. That is, the pattern C1 is formed into the shape of ring. The width of the pattern C1 in the radial direction is about 0.7 to 1.3 times of the width of the pattern B1 in the radial direction.

A pattern D1 is provided at the outer periphery side of the pattern C1 on the inner surface at the center of the case lower-half portion 640d. The inner peripheral portion of the pattern D1 is formed into a circular shape concentrically with the outer peripheral portion of the pattern C1 while leaving a gap from the outer peripheral portion of the pattern C1. The outer peripheral portion of the pattern D1 is formed into a circular shape concentrically with the inner peripheral portion of the pattern D1 while leaving a gap from the inner peripheral portion of the pattern D1. That is, the pattern D1 is formed into the shape of ring. The width of the pattern D1 in the radial direction is about 0.7 to 1.3 times of the width of the pattern C1 in the radial direction.

Patterns A2, B2, C2 and D2 are formed on the case upper-half portion 640u in the same manner with the shape of the patterns A1, B1, C1 and D1 on the case lower-half portion 640d. That is, the patterns A2, B2, C2 and D2 are formed into the shape of ring. Then, the shapes of the patterns A1, B1, C1 and D1 on the case lower-half portion 640d are almost the same with the shapes of the patterns A2, B2, C2 and D2 on the case upper-half portion 640u, respectively.

As described above, the respective patterns A1, B1, C1, D1, A2, B2, C2 and D2 are insulated from each other.

According to the embodiment of the mechanical watch comprising the inventive position detector, the position detector 640 is disposed with respect to the main plate 102 so that the x-axis line and y-axis line run in parallel with the surface of the main plate 102 and in parallel with the surface of the dial 104. Accordingly, the position detector 640 is arranged with respect to the main plate 102 so that the z-axis line runs vertically to the surface of the main plate 102 and vertically to the surface of the dial 104.

Similarly to the lead wires shown in FIG. 10, lead wires (not shown) for transmitting signals from the patterns are connected to the respective patterns A1, B1, C1, D1, A2, B2, C2 and D2.

Conductive fluid 648 is stored in the case 640a as shown in FIG. 23. The conductive fluid 648 is mercury for instance. Although the volume of the conductive fluid 648 is 1/27 of the volume of the case 640a in the case shown in FIG. 23, it is preferable to be 1/50 to 1/10 of the volume of the case 640a. The volume of the conductive fluid 648 is determined so that it is able to contact with two or three patterns.

The conductive fluid 648 contacts with the pattern A1 and pattern B1 in the horizontal state as shown in FIG. 23. Accordingly, the pattern A1 and the pattern B1 are short-circuited by the conductive fluid 648 in the state shown in FIG. 23 (that is, they conduct from each other).

That is, FIG. 23 shows the state of the position detector 640 when the mechanical watch comprising the inventive position detector is disposed in the "flat position".

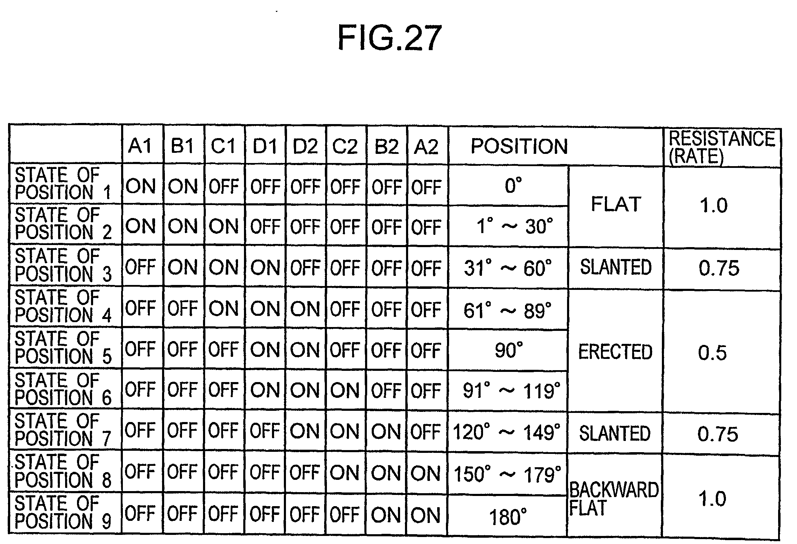

FIG. 27 shows the relationship between the various pattern-to-pattern conductive states and values of the resistor provided in the circuit in the fourth embodiment of the inventive position detector.

The items and contents described in FIG. 27 are the same with the items and contents in FIG. 13 described above.

### (7.1) State of Position 1:

The state of position 1 in FIG. 27 corresponds to the state in which the mechanical watch comprising the inventive position detector is in the "flat position".

The state of position 1 corresponds to the state in which the mechanical watch comprising the inventive position detector is disposed at almost 0 degree with respect to the horizontal plane.

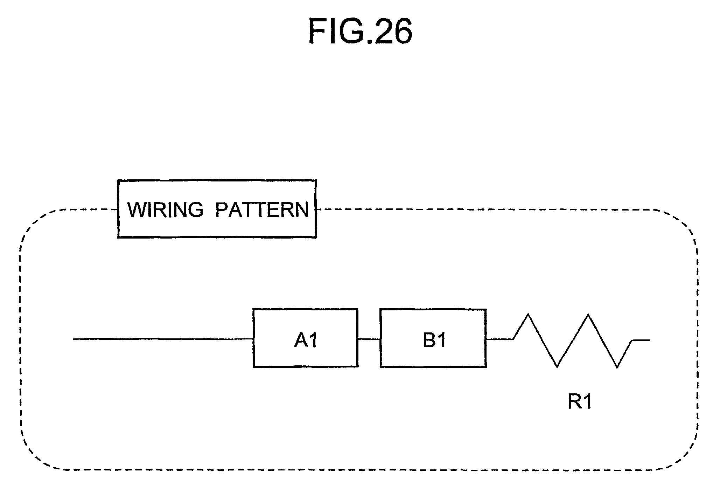

In the state of position 1, the pattern A1 and the pattern B1 conduct from each other and the resistor R1 is connected in series with the pattern A1 and pattern B1 in the circuit block 606 as shown in FIG. 26. Then, in the state of position 1, the resistor R1 is connected in series with the four coils 180, 180a, 180b and 180c by the wiring pattern. The value of the resistor R1 at this time is set as a reference value Rref (ohm).

When a combined value of resistance of the four coils 180, 180a, 180b and 180c is 1.7 kohm, the reference value Rref is 1.2 kohm for instance.

### (7.2) State of Position 2:

The state of position 2 in FIG. 27 corresponds to the state in which the mechanical watch comprising the inventive position detector is in the range of 1 to 30 degrees with respect to the horizontal plane.

In the state of position 2, the pattern A1, pattern B1 and the pattern C1 conduct from each other and the resistor R1 is connected in series with the pattern A1, pattern B1 and pattern C1 in the circuit block 606. Then, in the state of position 2, the resistor R1 is connected in series with the four coils 180, 180a, 180b and 180c by the wiring pattern. The value of the resistor R1 at this time is set so as to be equal to the reference value Rref (ohm).

### (7.3) State of Position 3:

The state of position 3 in FIG. 27 corresponds to the state in which the mechanical watch comprising the inventive position detector is in the range of 31 to 60 degrees with respect to the horizontal plane.

In the state of position 3, the pattern B1, pattern C1 and the pattern D1 conduct from each other and the resistor R2 is connected in series with the pattern B1, pattern C1 and pattern D1 in the circuit block 606. Then, in the state of position 3, the resistor R2 is connected in series with the four coils 180, 180a, 180b and 180c by the wiring pattern.

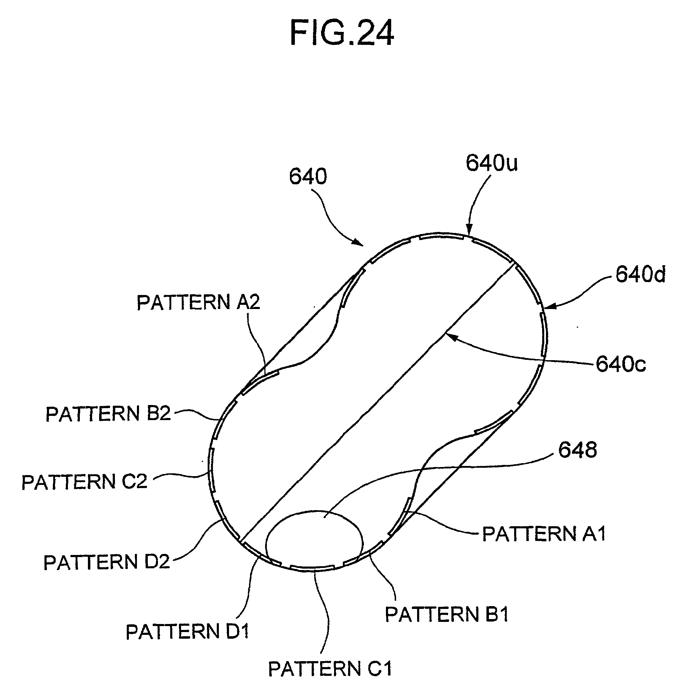

FIG. 24 shows the position detector 640 when the mechanical watch comprising the inventive position detector is disposed so as to form an angle of 45 degrees to the horizontal plane.

### (7.4) State of Position 4:

The state of position 4 in FIG. 27 corresponds to the state in which the mechanical watch comprising the inventive position detector is in the range of 61 to 89 degrees with respect to the horizontal plane.

In the state of position 4, the pattern C1, pattern D1 and pattern D2 conduct from each other and the resistor R3 is connected in series with the pattern C1, pattern D1 and pattern D2 in the circuit block 606. Then, in the state of position 4, the resistor R3 is connected in series with the four coils 180, 180a, 180b and 180c by the wiring pattern. The value of resistor R3 at this time is set so that it becomes 0.5 times of the reference value Rref (ohm) (that is, 0.5 x Rref).

### (7.5) State of Position 5:

The state of position 5 in FIG. 27 corresponds to the state in which the mechanical watch comprising the inventive position detector is disposed vertically.

In the state of position 5, the pattern D1 and pattern D2 conduct from each other and the resistor R3 is connected in series with the pattern C1, pattern D1 and pattern D2 in the circuit block 606. Then, in the state of position 5, the resistor R3 is connected in series with the four coils 180, 180a, 180b and 180c by the wiring pattern. The value of the resistor R3 at this time is set so that it becomes 0.5 times of the reference value Rref (ohm) (that is, 0.5 x Rref).

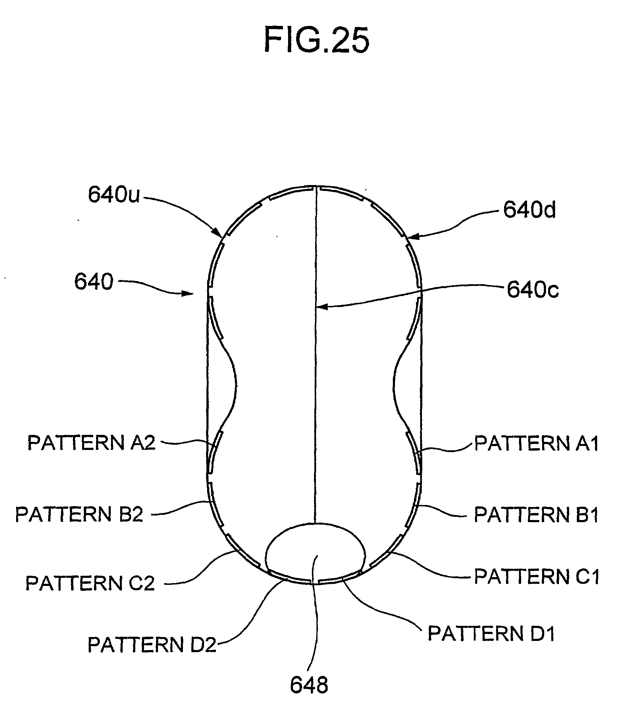

FIG. 25 shows the position detector 640 when the mechanical watch comprising the inventive position detector is disposed vertically.

### (7.6) State of Position 6:

The state of position 6 in FIG. 27 corresponds to the state in which the mechanical watch comprising the inventive position detector is in the range of 91 to 119 degrees with respect to the horizontal plane.

In the state of position 6, the pattern D1, pattern D2 and pattern C2 conduct from each other and the resistor R3 is connected in series with the pattern D1, pattern D2 and pattern C2 in the circuit block 606. Then, in the state of position 6, the resistor R3 is connected in series with the four coils 180, 180a, 180b and 180c by the wiring pattern.

### (7.7) State of Position 7:

The state of position 7 in FIG. 27 corresponds to the state in which the mechanical watch comprising the inventive position detector is in the range of 120 to 149 degrees with respect to the horizontal plane.

In the state of position 7, the pattern D2, pattern C2 and pattern B2 conduct from each other and the resistor R2 is connected in series with the pattern D2, pattern C2 and pattern B2 in the circuit block 606. Then, in the state of position 7, the resistor R2 is connected in series with the four coils 180, 180a, 180b and 180c by the wiring pattern. The value of the resistor R2 at this time is set so that it becomes 0.75 times of the reference value Rref (ohm) (that is, 0.75 x Rref).

### (7.8) State of Position 8:

The state of position 8 in FIG. 27 corresponds to the state in which the mechanical watch comprising the inventive position detector is in the range of 150 to 179 degrees with respect to the horizontal plane.

In the state of position 8, the pattern C2, pattern B2 and pattern A2 conduct from each other and the resistor R1 is connected in series with the pattern C2, pattern B2 and pattern A2 in the circuit block 606. Then, in the state of position 8, the resistor R1 is connected in series with the four coils 180, 180a, 180b and 180c by the wiring pattern. The value of the resistor R1 at this time is set so that it becomes equal to the reference value Rref (ohm).

### (7.9) State of Position 9:

The state of position 9 in FIG. 27 corresponds to the state in which the mechanical watch comprising the inventive position detector is in the "backward flat position".

The state of position 9 corresponds to the state in which the mechanical watch comprising the inventive position detector is in the range of 180 degrees with respect to the horizontal plane.

In the state of position 9, the pattern B2 and pattern A2 conduct from each other and the resistor R1 is connected in series with the pattern B2 and pattern A2 in the circuit block 606. Then, in the state of position 9, the resistor R1 is connected in series with the four coils 180, 180a, 180b and 180c by the wiring pattern. The value of the resistor R1 at this time is set so that it becomes equal to the reference value Rref (ohm).

### (8) Fifth Embodiment of Position Detector:

Next, a fifth embodiment of the inventive position detector and a position detector 650 in the embodiment of the mechanical watch comprising the inventive position detector will be explained.

In the explanation below, the points of the fifth embodiment of the inventive position detector different from the first embodiment of the inventive position detector will be mainly described. Accordingly, the explanation of the first embodiment of the inventive position detector described above will be applied to the parts other than the contents described below.

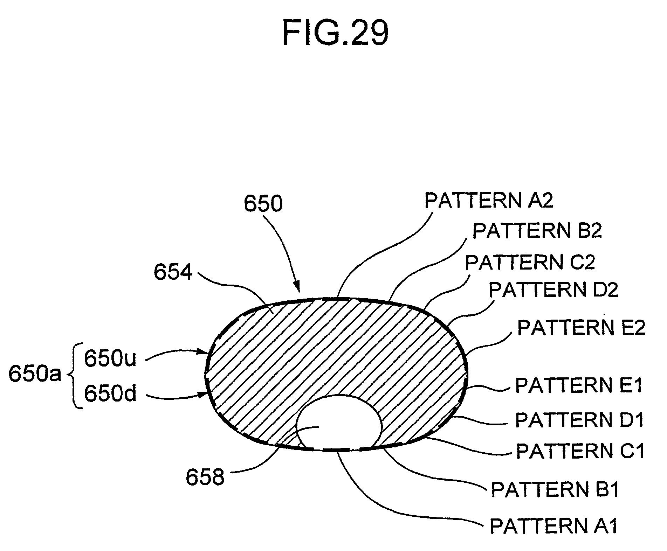

As shown in FIG. 29, the position detector 650 has a case 650a whose shape seen from the top is almost circular and whose shape seen from the side is almost "elliptic".

The case 650a is formed symmetrically in the vertical direction about a center plane 650c. The material, shape and size of the case 650a are the same with the case 610a.

The shape of patterns of the position detector 650 is the same with the position detector 610.

Conductive fluid 658 is stored in the case 650a for example as shown in FIG. 29. The conductive fluid 658 is mercury for instance. Although the volume of the conductive fluid 658 is 1/28 of the volume of the case 650a in the case shown in FIG. 29, it is preferable to be 1/50 to 1/10 of the volume of the case 650a. The volume of the conductive fluid 658 is determined so that it is able to contact with two or three patterns.

Insulating fluid 654 is stored in the case 650a. The insulating fluid 654 is stored in the whole or part of the remaining part of the case 650a in which the conductive fluid 658 is stored. The insulating fluid 654 is preferable to be insulating oil such as diphenyl chloride, benzene chloride and silicone oil for instance.

Although the volume of the insulating fluid 654 is 1/1.04 of the volume of the case 650a in the case shown in FIG. 29, it is preferable to be 1/1.02 to 1/1.1 of the volume of the case 650a. The volume of the insulating fluid 654 is preferable to be 1/3 to 1/1 of the volume of the remaining part of the case 650a in which the conductive fluid 658 has been stored.

The specific gravity of the insulating fluid 654 is smaller than the specific gravity of the conductive fluid 658.

The position may be detected quickly and reliably by using the insulating fluid 654 and by reducing the specific gravity of the insulating fluid 654 to be smaller than the specific gravity of the conductive fluid 658.

The viscosity of the insulating fluid 654 is preferable to be smaller than the viscosity of the conductive fluid 658.

The position may be detected quickly and reliably and the sensitive reaction may be eliminated by using the insulating fluid 654 and by reducing the viscosity of the insulating fluid 654 to be smaller than the viscosity of the conductive fluid 658.

The conductive fluid 658 contacts with the pattern A1 and pattern B1 in the horizontal state as shown in FIG. 29. Accordingly, the pattern A1 and the pattern B1 are short-circuited by the conductive fluid 658 in the state shown in FIG. 29 (that is, they conduct from each other).

That is, FIG. 29 shows the state of the position detector 650 when the mechanical watch comprising the inventive position detector is disposed in the "flat position".

### (9) Sixth Embodiment of Position Detector:

Next, a sixth embodiment of the inventive position detector and a position detector 660 in the embodiment of the mechanical watch comprising the inventive position detector will be explained.

In the explanation below, the points of the fifth embodiment of the inventive position detector different from the first embodiment of the inventive position detector will be mainly described. Accordingly, the explanation of the first embodiment of the inventive position detector described above will be applied to the parts other than the contents described below.

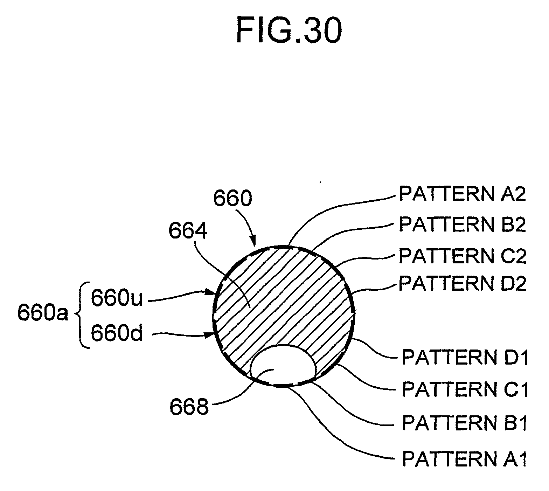

As shown in FIG. 30, the position detector 660 has a case 660a whose outer shape is almost spherical. The material, shape and dimension of the case 660a are almost the same with the case 630a.

The shape of patterns of the position detector 660 is the same with those of the position detector 630.

Conductive fluid 668 is stored in the case 660a. The material and the volume of the conductive fluid 668 are the same as those of the conductive fluid 638. Insulating fluid 664 is stored in the case 660a. Insulating fluid 664 is stored in the whole or part of the remaining part of the case 660a in which the conductive fluid 668 is stored. The insulating fluid 664 is preferable to be insulating oil such as diphenyl chloride, benzene chloride and silicone oil for instance.

Although the volume of the insulating fluid 664 is 1/1.2 of the volume of the case 660a in the case shown in FIG. 30, it is preferable to be 1/1.1 to 1/1.5 of the volume of the case 660a. The volume of the insulating fluid 664 is preferable to be 1/3 to 1/1 of the volume of the remaining part of the case 660a in which the conductive fluid 668 has been stored.

The specific gravity of the insulating fluid 664 is smaller than the specific gravity of the conductive fluid 668.

The position may be detected quickly and reliably by using the insulating fluid 664 and by reducing the specific gravity of the insulating fluid 664 to be smaller than the specific gravity of the conductive fluid 668.

The viscosity of the insulating fluid 664 is preferable to be smaller than the viscosity of the conductive fluid 668.

The position may be detected quickly and reliably and the sensitive reaction may be eliminated by using the insulating fluid 664 and by reducing the viscosity of the insulating fluid 664 to be smaller than the viscosity of the conductive fluid 668.

The conductive fluid 668 contacts with the pattern A1 and pattern B1 in the horizontal state as shown in FIG. 30. Accordingly, the pattern A1 and the pattern B1 are short-circuited by the conductive fluid 668 in the state shown in FIG. 30 (that is, they conduct from each other).

That is, FIG. 30 shows the state of the position detector 660 when the mechanical watch comprising the inventive position detector is disposed in the "flat position".

The conductive fluid may be used also in all of the embodiments of the inventive position detector.

### (10) Simulation Concerning on Instantaneous Rate

Next, the result of simulation concerning on instantaneous rate carried out on the mechanical watch comprising the inventive position detector which has been developed to solve the problems of the prior art mechanical watch will be explained.

As shown in FIG. 37, the mechanical watch comprising the inventive position detector is adjusted at first such that the instantaneous rate of the watch is advanced as indicated by a thin line in FIG. 37.

In the mechanical watch comprising the inventive position detector, the instantaneous rate advances further because the effective length of the hair spring 140c is shortened when the outer edge of the hair spring 140c contacts with the first contact member 168a or the second contact member 168b when the balance 140 rotates more than certain angle.

That is, the rate in the flat position in the state in which the spring is totally wound up is about 23 seconds/day (advances by about 23 seconds per day) and the rate in the erected position is about 18 seconds/day (advances by about 18 seconds per day) as indicated by the thin lines in FIG. 37 in the state in which the outer edge of the hair spring 140c does not contact with the first contact member 168a nor the second contact member 168b in the mechanical watch comprising the inventive position detector. The rate in the flat position becomes about 17 seconds/day (advances by about 17 seconds per day) and the rate in the erected position becomes about 13 seconds/day (advances by about 13 seconds per day) when 20 hours elapse from the total wind-up state. The rate in the erected position becomes about -2 seconds/day (delays by about 2 seconds per day) and the rate in the flat position becomes about -3 seconds/day (delays by about 3 seconds per day) when 30 hours elapse from the total wind-up state.

The mechanical watch comprising the inventive position detector can maintain the instantaneous rate of about 5 seconds/day (maintains the state in which it advances by about 5 seconds per day) until when 27 hours elapse from the state in which the spring is totally wound up as indicated by an extra thick line in FIG. 37 in the state in which the outer edge of the hair spring 140c contacts with the first contact member 168a or the second contact member 168b. The instantaneous rate becomes about -2 seconds/day (delays by about 2 seconds per day) when 30 hours elapse from the total wind-up state.

Because the mechanical watch comprising the inventive position detector suppresses the changes of the instantaneous rate of the watch by controlling the swing angle of the balance, it can prolong the elapsed time from the total wind-up state in which the instantaneous rate is about 0 to 5 seconds/day as compared to the prior art mechanical watch indicated by the extra thin lines in FIG. 37.

That is, the duration in which the instantaneous rate is within about ±5 seconds/day is about 32 hours in the mechanical watch comprising the inventive position detector. The value of this duration is about 1.45 times of the duration of the prior art mechanical watch, i.e., about 22 hours, in which the instantaneous rate is about ±5 seconds/day.

Accordingly, the simulation result showing that the mechanical watch comprising the inventive position detector is very accurate as compared to the prior art mechanical watch has been obtained.

### (7) Effects of the Invention:

As described above, the mechanical watch comprising the inventive position detector is arranged so as to control the balance rotation angle in correspondence to various positions of the mechanical watch. Accordingly, the swing angle may be kept almost constant even when the mechanical watch is placed at any position.

### INDUSTRIAL APPLICABILITY

The mechanical watch comprising the inventive position detector is suitable for realizing the mechanical watch having a simple structure and high precision.

Further, the mechanical watch comprising the inventive position detector is suitable in manufacturing the small, thin and high-precision mechanical watch more efficiently.

## Claims

1. A mechanical watch comprising a spring composing a power source of the mechanical watch, a front wheel train which rotates by rotational force which is generated when the spring is unwound and an escape and governor for controlling the rotation of the front wheel train and;
the escape and governor comprising a balance which repeats right and left turns alternately, an escape wheel & pinion which rotates based on the rotation of the front wheel train and a pallet fork which controls the rotation of the escape wheel & pinion based on the operation of the balance;
the mechanical watch comprising a switch mechanism (168, 168a, 168b) which outputs ON signal when the rotational angle of the balance (140) exceeds a predetermined threshold value and outputs OFF signal when the rotational angle of the balance (140) does not exceed the predetermined threshold value;
a balance rotational angle controlling mechanism (140e, 180) which is arranged so as to apply force which suppresses the rotation of the balance (140) to the balance (140) when the switch mechanism (168, 168a, 168b) outputs the ON signal; and
a position detector for detecting the position of the mechanical watch;
the inventive mechanical watch being characterized in that the operation of said balance rotational angle controlling mechanism (140e, 180) is controlled based on the resultant position of the mechanical watch detected by said position detector; and
said position detector comprising a case (610a) whose shape seen from the top is circular and whose shape seen from the side is elliptic, a plurality of patterns (A1 through E2) disposed on the inner surface of said case (610a) and conductive fluid (608) stored within said case (610a).

2. The mechanical watch as described in Claim 1, characterized in that said position detector comprises a case (620a) whose shape seen from the top is circular and whose shape seen from the side is elliptic, a plurality of patterns (A1 through F2) disposed on the inner surface of said case (620a) and conductive fluid (628) stored within said case (620a).

3. The mechanical watch as described in Claim 1, characterized in that said position detector comprises a case (630a) whose outer shape is spherical, a plurality of patterns (A1 through D2) disposed concentrically on the inner surface of said case (630a) and conductive fluid (638) stored within said case (630a).

4. The mechanical watch as described in Claim 1, characterized in that said position detector comprises a case (640a) whose shape seen from the top is circular and whose sectional shape seen from the side is the shape of cocoon, a plurality of patterns (A1 through D2) disposed on the inner surface of said case (640a) and conductive fluid (648) stored within said case (640a).

5. The mechanical watch as described in any one of Claims 1 through 4, characterized in that said position detector comprises insulating fluid (654, 664) stored within the case.

6. The mechanical watch as described in any one of Claims 1 through 5, characterized in that the patterns of the position detector are disposed concentrically and the respective patterns are formed into the circular or ringed shape.

7. The mechanical watch as described in any one of Claims 1 through 6, characterized in that said switching mechanism (168, 168a, 168b) is constructed so as to output ON signals when a hair spring (140c) provided in the balance (140) contacts with a contact member (168a, 168b) composing a switch lever.

8. The mechanical watch as described in any one of Claims 1 through 7, characterized in that said balance rotational angle control mechanism (140e, 180) comprises a balance magnet (140e) provided in the balance (140) and coils (180, 180a, 180b, 180c) disposed so as to be able to exert magnetic force to the balance magnet (140e);
said coils (180, 180a, 180b, 180c) applying the magnetic force to the balance magnet (140e) when said switching mechanism (168, 168a, 168b) outputs the ON signal to suppress the rotation of the balance (140) and applying no magnetic force to the balance magnet (140e) when said switching mechanism (168, 168a, 168b) outputs the OFF signal.

9. The mechanical watch as described in Claim 8, characterized in that said position detector comprises a plurality of resistors (R1 through R6) provided so as to correspond to the conductive state of the patterns of said position detector and having different resistance values and one of the resistors (R1 through R6) is connected to said coils (180, 180a, 180b, 180c) based on the resultant position of the mechanical watch detected by said position detector.
